# EUROPEAN PATENT SPECIFICATION

(11) **EP 2 908 542 B1**
(45) Date of publication and mention of the grant of the patent: **26.09.2018**
(21) Application number: 13845230.5
(22) Date of filing: 08.10.2013
(51) Int. Cl.: H04N 21/4385, H04N 21/418, H04N 21/434, H04N 21/236, H04N 21/4367, H04N 21/436, H04N 21/426

(54) **ELECTRONIC DEVICES, COMPOSITE-STREAM TRANSMISSION METHODS, AND PROGRAMS FOR A CONDITIONAL ACCESS SYSTEM MODULE IN A DIGITAL BROADCASTING RECEPTION SYSTEM**
ELEKTRONISCHE VORRICHTUNGEN, ÜBERTRAGUNGSVERFAHREN FÜR ZUSAMMENGESETZTE STRÖME UND PROGRAMM FÜR EIN ZUGANGSBERECHTIGUNGSMODUL IN EINEM DIGITALEN RUNDFUNKEMPFANGSSYSTEM
DISPOSITIFS ÉLECTRONIQUES, PROCÉDÉS DE TRANSMISSION DE FLUX COMPOSITE ET PROGRAMMES POUR UN MODULE D'ACCÈS CONDITIONNEL DANS UN SYSTÈME DE RÉCEPTION DE RADIODIFFUSION NUMÉRIQUE

(30) Priority: 10.10.2012 JP 2012225563
(43) Date of publication of application: 19.08.2015
(73) Proprietor: Saturn Licensing LLC, New York, NY 10022-3211 (US)
(72) Inventor: HIRAYAMA, Yuichi, Tokyo 108-0075 (JP); OKADA, Satoshi, Tokyo 108-0075 (JP); MICHAEL, Lachlan, Bruce, Tokyo 108-0075 (JP); IKEDA, Tamotsu, Tokyo 108-0075 (JP)
(74) Representative: Witte, Weller & Partner Patentanwälte mbB
(86) International application number: PCT/JP2013/077398
(87) International publication number: WO 2014/057955

(56) References cited:
- EP-A2- 1 463 320
- EP-A2- 1 463 320
- JP-A- H11 306 132
- JP-A- 2001 086 481
- JP-A- 2009 171 575
- US-B1- 7 508 454
- US-B1- 7 508 454
- DVB ORGANIZATION: "MS CI+1.4 DVB 20121001.pptx", DVB, DIGITAL VIDEO BROADCASTING, C/O EBU - 17A ANCIENNE ROUTE - CH-1218 GRAND SACONNEX, GENEVA - SWITZERLAND, 1 October 2012 (2012-10-01), XP017839930,
- DVB ORGANIZATION: "TM-CI-Plus0082 MultiStream - PCR Timing Recovery Proposal.pptx", DVB, DIGITAL VIDEO BROADCASTING, C/O EBU - 17A ANCIENNE ROUTE - CH-1218 GRAND SACONNEX, GENEVA - SWITZERLAND, 29 August 2012 (2012-08-29), XP017839934,
- DVB ORGANIZATION: "TM-CI-Plus0068 Multi Stream Updated Proposal.pptx", DVB, DIGITAL VIDEO BROADCASTING, C/O EBU - 17A ANCIENNE ROUTE - CH-1218 GRAND SACONNEX, GENEVA - SWITZERLAND, 26 June 2012 (2012-06-26), XP017838965,
- DVB ORGANIZATION: "TM-CI-Plus0083 Minutes Meeting 6.doc", DVB, DIGITAL VIDEO BROADCASTING, C/O EBU - 17A ANCIENNE ROUTE - CH-1218 GRAND SACONNEX, GENEVA - SWITZERLAND, 29 August 2012 (2012-08-29), XP017840027,

## Description

### TECHNICAL FIELD

The present technology relates to an electronic device, a synthesized stream transmitting method, and a program, and more particularly to an electronic device and others for synthesizing plural streams into one stream and transmitting and receiving the synthesized stream to and from an external device.

### BACKGROUND ART

CI_Plus standard v1. 3. 1 released in January, 2011 does not have a function of simultaneous descrambling of plural receiving channels, and therefore does not allow simultaneous recording of a program by a viewer who is viewing another program. Rather than CI_Plus, M-Card system meeting USA open cable (Open Cable) standards is known as a precedent having this function, and is currently in operation.

M-Card system realizes output from a host device (Host Device), such as a television receiver (TV Set) and a set-top box (Set-top Box), to a CAM module having the descrambling function without changing a conventional physical interface, by full-multiplexing MPEG-TS signals received by two tuners provided within the host device on a time axis.

For example, there is described in Patent Document 1, a method which creates a synthesized stream by multiplexing two transport streams, transmits and receives the synthesized stream to and from a security mechanism executing descrambling, and distributes transport packets of the received synthesized stream based on stream identification information.

### CITATION LIST

### PATENT DOCUMENT

Patent Document 1: US Patent No. 7,508,454

Further prior art can be found in:
DVB ORGANIZATION, "MS CI+1.4 DVB 20121001.pptx", DVB, DIGITAL VIDEO BROADCASTING, C/O EBU - 17A ANCIENNE ROUTE - CH-1218 GRAND SACONNEX, GENEVA - SWITZERLAND, (20121001);
DVB ORGANIZATION, "TM-CI-Plus0082 MultiStream - PCR Timing Recovery Proposal.pptx", DVB, DIGITAL VIDEO BROADCASTING, C/O EBU - 17A ANCIENNE ROUTE - CH-1218 GRAND SACONNEX, GENEVA - SWITZERLAND, (20120829) ; and
DVB ORGANIZATION, "TM-CI-Plus0068 Multi Stream Updated Proposal.pptx", DVB, DIGITAL VIDEO BROADCASTING, C/O EBU - 17A ANCIENNE ROUTE - CH-1218 GRAND SACONNEX, GENEVA - SWITZERLAND, (20120626).

### SUMMARY OF THE INVENTION

### PROBLEMS TO BE SOLVED BY THE INVENTION

An object of the present technology is to synthesize plural streams into one stream, and realize preferable transmission and reception of the synthesized stream to and from an external device.

### SOLUTIONS TO PROBLEMS

According to the present invention an electronic device representing a host device, an electronic device representing a CAM module, a synthesized stream transmitting method performed by a host device, a method performed by a CAM module and a computer program are presented.

According to the present technology, the synthesized stream creating unit synthesizes transport stream packets of plural transport streams to create a synthesized stream. Then, the stream transmitting unit transmits the synthesized stream to the external device. For example, the stream transmitting unit and the stream receiving unit may transmit and receive the synthesized stream to and from the external device via a DVB-CI common interface, or a CI+ common interface, and the external device may be a conditional access module (CAM module) that executes descrambling.

The processing information retaining unit retains processing information for a certain period, which information is output at the transmission timing of the respective transport stream packets of the synthesized stream, and used for processing the respective transport stream packets. The processing information retaining unit is constituted by a FIFO (first in first out) memory, for example.

The count information adding unit brings a count information adding area provided in each of the transport stream packets into a state to which a particular count value is added for each of the transport stream packets of the synthesized stream transmitted to the external device. For example, the count information adding area may be constituted by a partial area of a synchronous byte area within a header of each of the transport stream packets.

In this case, the partial area may be a predetermined-number bit area having 1 as a bit value of a synchronous signal. In this case, bit values corresponding to a synchronous signal can be used without change when the particular count value is set to a value containing 1 for all the bit values. In this state, rewriting is not required.

The stream receiving unit receives the synthesized stream from the external device. For example, the external device equalizes the order of the respective transport stream packets of the transmitted synthesized stream with the order of the respective transport stream packets of the received synthesized stream based on the fact that the count information added to the count information adding area provided in each of the transport stream packets is the particular count value. Then, the processing unit processes the respective transport stream packets of the received synthesized stream based on the processing information sequentially output from the processing information and corresponding to the respective transport stream packets.

According to the present technology, therefore, the count information adding area provided in each of the transport stream packets is brought into the state to which the particular count value is added for each of the transport stream packets of the synthesized stream transmitted to the external device. Accordingly, this configuration notifies the external device that a function for handling the packet order switching based on count information is not provided, and receives the synthesized stream containing the respective transport stream packets arranged in the same order as the order of the transport stream packets at the time of transmission.

According to the present technology, the processing information for processing the respective transport stream packets may contain time information indicating time positions of the respective transport stream packets in original transport streams, and the processing unit may locate, in respective streams to which the respective transport stream packets of the received synthesized stream are distributed, the respective transport stream packets at time positions in accordance with the time information corresponding to the respective transport stream packets so as to reconstitute the plural transport streams, for example.

In this case, there may be further provided a stream identification information adding unit that adds stream identification information for identifying original transport streams to the respective transport stream packets of the synthesized stream transmitted to the external device, and a stream identification information obtaining unit that obtains the stream identification information from the respective transport stream packets of the received synthesized stream. The processing unit may distribute the respective transport stream packets of the received synthesized stream to the respective streams in accordance with the stream identification information obtained from the respective transport stream packets.

The count information adding unit adds the count information sequentially counted while skipping a particular count value to both the count information adding area provided in each of the transport stream packets, and the processing information output in correspondence with the transport stream packets for each of the transport stream packets of the synthesized stream transmitted to the external device. For example, the count information adding area may be constituted by a partial area of a synchronous byte area within a header of each of the transport stream packets. In this case, the partial area may be a low-order 4-bit area or a low-order 3-bit area, for example.

The stream receiving unit receives the synthesized stream from the external device. Then, the processing unit processes the respective transport stream packets of the received synthesized stream based on the processing information extracted from the processing information retaining unit and containing count information having the same count value as the count value of count information added to each of the transport stream packets.

According to the present technology, therefore, the count information sequentially counted while skipping a particular count value is added to both the count information adding area provided in each of the transport stream packets, and the processing information output in correspondence with the transport stream packets for each of the transport stream packets of the synthesized stream transmitted to the external device. Accordingly, this configuration notifies the external device that the function for handling packet order switching based on count information is provided. In this case, the respective transport stream packets of the received synthesized stream can be appropriately processed based on the corresponding processing information even when the respective transport stream packets received from the external device are arranged in an order different from the order of the transport stream packet at the time of transmission.

According to the present technology, for example, the processing information for processing the respective transport stream packets of the received synthesized stream may contain time information indicating time positions of the respective transport stream packets in original transport streams, and the processing unit may locate, in respective streams to which the respective transport stream packets of the received synthesized stream are distributed, the respective transport stream packets at time positions in accordance with the time information corresponding to the respective transport stream packets so as to reconstitute the plural transport streams.

In this case, there may be further provided a stream identification information adding unit that adds stream identification information for identifying original transport streams to the respective transport stream packets of the synthesized stream transmitted to the external device, and a stream identification information obtaining unit that obtains the stream identification information from the respective transport stream packets of the received synthesized stream. The processing unit may distribute the respective transport stream packets of the received synthesized stream to the respective streams in accordance with the stream identification information obtained from the respective transport stream packets.

According to the present technology, the stream receiving unit receives the synthesized stream created by synthesizing the transport stream packets of the plural transport streams from the external device. The processing unit separates the respective transport stream packets of the received synthesized stream, decrypts the respective separated transport stream packets, and synthesizes the respective decrypted transport stream packets to create a synthesized stream. Then, the stream transmitting unit transmits the created synthesized stream to the external device.

The control unit controls the processing unit based on count information added to the count information adding area provided in each of the transport stream packets of the received synthesized stream. For example, the count information adding area may be constituted by a partial area of a synchronous byte area within a header of each of the transport stream packets.

For example, the control unit may control such that the order of the respective transport stream packets of the created synthesized stream becomes the same order as the order of the respective transport stream packets of the received synthesized stream when the count information has a particular count value. In this case, the control unit may raise the speed of decrypting operation. By raising the operation speed, the power consumption increases. However, reduction of the delay amount is achievable.

According to the present technology, therefore, the processing unit is controlled based on the count information added to the count information adding area provided in each of the transport stream packets of the received synthesized stream. This configuration easily notifies the external device that the function for handling packet order switching based on count information is not provided, and transmits to the external device a synthesized stream containing the respective transport stream packets arranged in the same order as the order of the transport stream packets at the time of transmission.

### EFFECTS OF THE INVENTION

According to the present technology, plural streams are synthesized into one stream, and preferable transmission and reception of the synthesized stream to and from an external device is realized.

### BRIEF DESCRIPTION OF DRAWINGS

Fig. 1 is a block diagram illustrating a configuration example of a digital broadcasting reception system according to an embodiment.
Fig. 2 is a block diagram illustrating a configuration example of a common interface controller which has a function for handling packet order switching based on count information, and allows switching of a packet order at a CAM module.
Fig. 3 is a figure illustrating a structure of a transport stream packet (TSP).
Fig. 4 is a block diagram illustrating a configuration example of a multiplexing unit constituting a common interface controller.
Figs. 5(a) and 5(b) are figures illustrating an example of information added to a PID packet, and an example of information retained at a FIFO unit only for a certain period.
Fig. 6 is a figure illustrating an example of bit allocation of LTSID and LCC in a synchronous byte area.
Figs. 7 (a) to 7 (c) are figures illustrating an example of bit arrangement and the like when 4 bits are allocated to both LTSID and LCC.
Figs. 8(a) to 8(c) are figures illustrating an example of bit arrangement and the like when 5 bits and 3 bits are allocated to LTSID and LCC, respectively.
Figs. 9(a) to 9(c) are figures illustrating another example of bit arrangement and the like when 4 bits are allocated to both LTSID and LCC.
Fig. 10 is a block diagram illustrating a configuration example of a demultiplexing unit constituting the common interface controller.
Fig. 11 is a block diagram illustrating a configuration example of a FIFO unit constituting the common interface controller.
Figs. 12(a) to 12(d) are figures schematically illustrating an operation example (1/2) of the FIFO unit.
Figs. 13(e) to 13(h) are figures schematically illustrating an operation example (2/2) of the FIFO unit.
Figs. 14(a) and 14(b) illustrate a configuration example of the PID packets of respective transport streams supplied to the LTS adding unit and an example of not unnecessary PID packets after removal of PID data packets of not selected (channel-selected) service channels.
Figs. 15(a) to 15(c) are figures for explaining processing by the multiplexing unit and an LCC adding unit.
Figs. 16(a) to 16(c) are figures for explaining processing by the demultiplexing unit and the FIFO unit.
Fig. 17 is a flowchart showing an example of processing procedures executed by the common interface controller for synthesizing PID packets of respective transport streams and transmitting the synthesized PID packets to the CAM module as one stream.
Fig. 18 is a figure illustrating an example of processing procedures executed by the common interface controller for receiving the synthesized PID packets of the respective transport streams from the CAM module.
Fig. 19 is a block diagram illustrating a configuration example of a common interface which does not have the function for handling packet order switching based on count information, and does not allow switching of a packet order at the CAM module.
Figs. 20(a) to 20(c) are figures schematically illustrating an operation example (1/2) of the FIFO unit.
Fig. 21(a) to 21(c) are figures schematically illustrating an operation example (2/2) of the FIFO unit.
Fig. 22 is a flowchart showing an example of processing procedures executed by the common interface controller for synthesizing PID packets of respective transport streams and transmitting the synthesized PID packets to the CAM module as one stream.
Fig. 23 is a figure illustrating an example of processing procedures executed by the common interface controller for receiving the synthesized PID packets of the respective transport streams from the CAM module.
Fig. 24 is a block diagram illustrating a configuration example of the CAM module.
Figs. 25(a) to 25(d) are timing charts when a synthesized stream CTS received by a TS separating unit is transmitted from a controller having the function for handling packet order switching based on count information.
Figs. 26(a) to 26(d) are timing charts when the synthesized stream CTS received by the TS separating unit is transmitted from a controller not having the function for handling packet order switching based on count information.
Fig. 27 is a flowchart showing an outline of an example of processing procedures executed by the CAM module.
Figs. 28(a) to 28(d) are timing charts when the synthesized stream CTS received by the TS separating unit is transmitted from a controller not having the function for handling packet order switching based on count information, at a raised speed of decryption.
Figs. 29(a) and 29(b) are figures illustrating another example of information added to a PID packet, and information retained by the FIFO unit only for a certain period.
Fig. 30 is a figure illustrating an example of bit allocation of LTSID and LCC in a cyclic counter area.

### MODE FOR CARRYING OUT THE INVENTION

A mode for carrying out the invention (hereinafter referred to as "embodiment") is now described. The description is presented in the following order.

### 1. Embodiment

### 2. Modified Example

### <1. Embodiment>

### [Configuration Example of Digital Broadcasting Reception System]

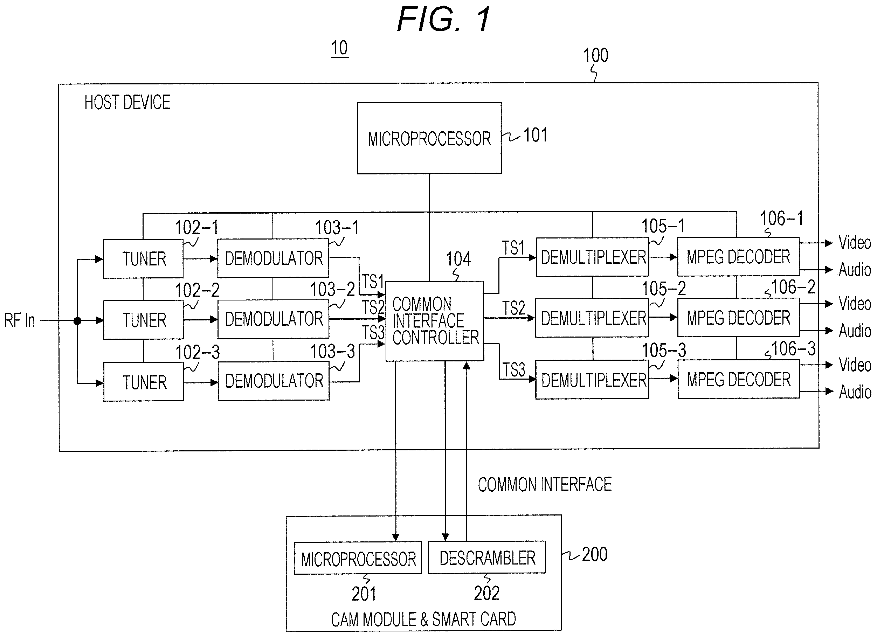

Fig. 1 is a configuration example of a digital broadcasting reception system 10 according to the embodiment. Discussed herein is an example handling three transport streams. However, the number of transport streams allowed to be handled by the present technology is not limited to this number. The reception system 10 is constituted by a host device (Host Device) 100, and a CAM module (CAM Module) 200. The host device 100 is an electronic device such as a television receiver (TV Set) and a set-top box (Set-top Box) .

The host device 100 includes a microprocessor (Microprocessor) 101, tuners (Tuners) 102-1, 102-2, and 102-3, and demodulators (Demodulators) 103-1, 103-2, and 103-3. The host device 100 further includes a common interface controller (Common Interface Controller) 104, demultiplexers (Demultiplexers) 105-1, 105-2, and 105-3. The host device 100 further includes MPEG decoders (MPEG Decoders) 106-1, 106-2, and 106-3.

The microprocessor 101 controls operations of the respective units of the host device 100. The tuners 102-1, 102-2, and 102-3 receive RF modulation signals of transport streams TS1, TS2, and TS3, respectively, transmitted from broadcasting stations. The tuners 102-1, 102-2, and 102-3 subsequently down-convert the received RF modulation signals into signals at an intermediate frequency, and output the converted signals as input to the demodulators 103-1, 103-2, and 103-3. The demodulators 103-1, 103-2, and 103-3 demodulate IF modulation signals at the intermediate frequency after down-conversion to obtain the baseband transport streams TS1, TS2, and TS3, respectively.

The common interface controller 104 synthesizes the transport streams TS1, TS2, and TS3 obtained at the demodulators 103-1, 103-2, and 103-3 to create a synthesized stream, and exchanges the synthesized stream with the CAM module 200, i.e., transmits and receives the synthesized stream to and from the CAM module 200. The common interface controller 104 and the CAM module 200 are connected via a DVB-CI common interface (DVB-CI Common Interface), or a CI+ common interface (CI+ Common Interface).

Each of the transport streams contains PID packets (TSP: transport stream packets) of plural service channels on a time-sharing basis. The common interface controller 104 performs exchanges while removing PID data packets of service channels not selected (channel-selected) from each of the transport streams. This method is adopted for the purpose of reduction of the transmission bit rate. The detailed configuration of the common interface controller 104 will be described later.

The demultiplexers 105-1, 105-2, and 105-3 extract PID data packets of selected (channel-selected) service channels from the transport streams TS1, TS2, and TS3 obtained at the common interface controller 104. These PID data packets are video and audio PID data packets. The MPEG decoders 106-1, 106-2, and 106-3 decode elementary streams constituted by the PID data packets extracted by the demultiplexers 105-1, 105-2, and 105-3 to obtain video data and audio data.

The CAM module 200 is an attachment device which engages with a common interface connector (Common Interface Connector) of the host device 100 for executing descrambling. The CAM module 200 is used with insertion of cards (Smartcards) such as a magnetic card and an IC card where view subscriber information, contract term information and others are recorded.

The CAM module 200 includes a microprocessor 201 and a descrambler (De-scrambling) 202. The CAM module 200 receives PID packets transmitted from the common interface controller 104 of the host device 100 via a common interface, and descrambles the received PID packets. The CAM module 200 subsequently transmits the respective PID packets to the common interface controller 104 of the host device 100.

The operation of the reception system 10 illustrated in Fig. 1 is now briefly described. The RF modulation signals of the transport streams TS1, TS2, and TS3 transmitted from the broadcasting stations are received by the tuners 102-1, 102-2, and 102-3, respectively. The received RF modulation signals are down-converted into signals at an intermediate frequency by the tuners 102-1, 102-2, and 102-3, and supplied to the demodulators 103-1, 103-2, and 103-3. The demodulators 103-1, 103-2, and 103-3 demodulate the IF modulation signals down-converted into the intermediate frequency to obtain the baseband transport streams TS1, TS2, and TS3, respectively. The obtained transport streams TS1, TS2, and TS3 are supplied to the common interface controller 104.

The common interface controller 104 synthesizes the PID packets of the transport streams TS1, TS2, and TS3 supplied from the demodulators 103-1, 103-2, and 103-3 to create a synthesized stream. The respective PID packets constituting the synthesized stream are sequentially transmitted from the common interface controller 104 to the CAM module 200 via the common interface. At this time, PID data packets of service channels not selected (channel-selected) are removed from each of the transport streams.

The CAM module 200 receives the synthesized stream transmitted from the common interface controller 104 of the host device 100 via the common interface, and descrambles the respective PID packets. Thereafter, the synthesized stream is transmitted from the CAM module 200 to the common interface controller 104 of the host device 100 via the common interface.

The common interface controller 104 receives the synthesized stream transmitted from the CAM module 200 via the common interface. The common interface controller 104 distributes the respective PID packets contained in the synthesized stream to respective streams to reconstitute the transport streams TS1, TS2, and TS3. The reconstituted transport streams TS1, and TS2, and TS3 are supplied to the demultiplexers 105-1, 105-2, and 105-3, respectively.

The demultiplexers 105-1, 105-2, and 105-3 extract PID data packets of service channels selected (channel-selected) from the transport streams TS1, TS2, and TS3, respectively, to which the PID data packets have been distributed by the common interface controller 104. The video and audio PID data packets extracted at the demultiplexers 105-1, 105-2, and 105-3 are supplied to the MPEG decoders 106-1, 106-2, and 106-3.

Each of the MPEG decoders 106-1, 106-2, and 106-3 decodes video and audio elementary streams constituted by video and audio PID data packets. Thereafter, video data and audio data of the selected (channel-selected) service channels are output from the MPEG decoders 106-1, 106-2, and 106-3.

### [Configuration Example of Common Interface Controller]

The detailed configuration of the common interface controller 104 is now described. Discussed herein are (1) a common interface controller 104A having a function for handling packet order switching based on count information, and (2) a common interface controller 104B not having a function for handling packet order switching based on count information.

### "Example Having Function for Handling Packet Order Switching"

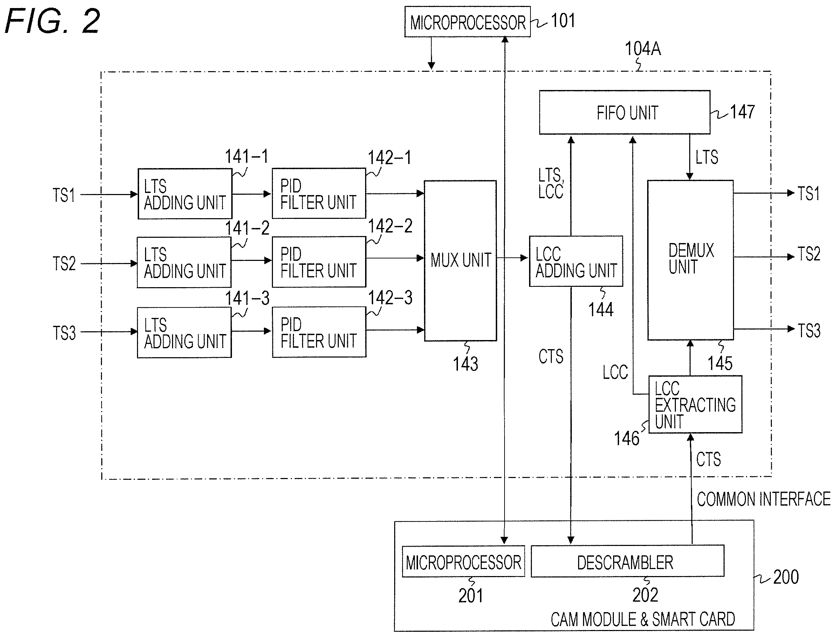

Initially discussed is the common interface controller 104A which has a function for handling packet order switching based on count information, and allows switching of the packet order at the CAM module 200. Fig. 2 illustrates a configuration example of the controller 104A. The controller 104A includes LTS (Local Time Stamp) adding units 141-1, 141-2, and 141-3, and PID filter (PID filter) units 142-1, 142-2, and 142-3. The controller 104A further includes a multiplexing (MUX) unit 143, an LCC (Local Continuity Counter) adding unit 144, a demultiplexing (DEMUX) unit 145, an LCC extracting unit 146, and a FIFO (First In First Out) unit 147.

The LTS adding units 141-1, 141-2, and 141-3 add an LTS (Local Time Stamp) corresponding to input time to each of the PID packets (TSP: transport stream packet) of the corresponding input transport streams TS1, TS2 and TS3. This LTS is obtained based on a clock generated by a self-advancing type clock generator or a PCR-recovered clock generator, for example.

The PID filter units 142-1, 142-2, and 142-3 execute filtering for removing PID data packets of channels not selected (channel-selected) from the transport streams TS1, TS2, and TS3. This filtering reduces the transmission bit rate of the synthesized stream obtained by synthesizing the respective PID data packets of the transport streams TS1, TS2, and TS3.

The multiplexing unit 143 synthesizes the respective PID packets of the transport streams TS1, TS2, and TS3 into one stream, i.e., creates a synthesized stream CTS, and outputs the synthesized stream CTS. The multiplexing unit 143 also adds an LTSID (Local TS Identifier) to a part of a synchronous byte (Sync byte) within a TS header of each of the PID packets of the synthesized stream CTS thus created. This LTSID is stream identification information for identifying the original transport stream of the corresponding PID packet, and created and used at the time of creation of the synthesized stream CTS.

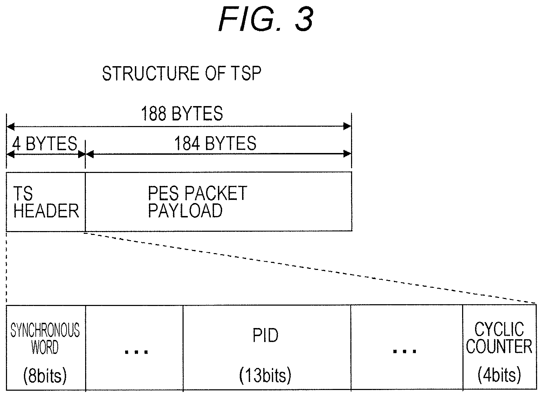

Fig. 3 illustrates a structure of a TSP (PID packet) . A TSP is configured to have a fixed length of 188 bytes. Initial 4 bytes of the TSP correspond to a TS header, and the following 184 bytes correspond to a PES packet payload. There exist in the TS header an 8-bit synchronous word (0 × 47) in the initial synchronous byte area, a subsequent 13-bit PID, and a final 4-bit cyclic counter (Continuity counter).

The multiplexing unit 143 also outputs LTSs (Local Time Stamps) corresponding to the respective PID packets in accordance with the output timing of the respective PID packets of the synthesized stream CTS. Each of the LTSs is time information indicating a time position of the corresponding PID packet in the original transport stream. For example, the LTSs added by the LTS adding units 141-1, 141-2, and 141-3 as discussed above are separated and utilized as the LTSs to be output from the multiplexing unit 143.

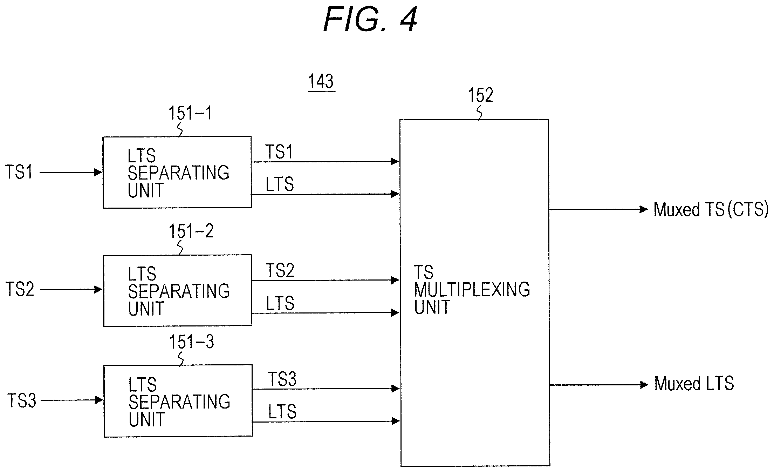

Fig. 4 illustrates a configuration example of the multiplexing unit 143. The multiplexing unit 143 includes LTS separating units 151-1, 151-2, and 151-3, and a TS multiplexing unit 152. The LTS separating units 151-1, 151-2, and 151-3 separate LTSs from the respective PID packets of the transport streams TS1, TS2, and TS3. The LTS separating units 151-1, 151-2, and 151-3 subsequently output the transport streams TS1, TS2, and TS3 constituted by respective PID packets not containing LTS, and also output LTSs corresponding to the LTSs which had been added to the respective PID packets.

The TS multiplexing unit 152 synthesizes the respective PID packets of the transport streams TS1, TS2, and TS3 output from the LTS separating units 151-1, 151-2, and 151-3 to create and output the synthesized stream CTS. For example, the respective PID packets of the transport streams TS1, TS2, and TS3 are temporarily accumulated in a not-shown dual port memory, and sequentially extracted in the order from the earliest PID packet on a time basis for synthesis.

The TS multiplexing unit 152 also creates a predetermined-bit LTSID for identifying the original transport stream of each of the PID packets of the synthesized stream CTS, and inserts and adds the created LTSID to a part of the synchronous byte area within the TS header of each of the PID packets. Thereafter, the TS multiplexing unit 152 sequentially outputs the LTSs corresponding to the respective PID packets based on the LTSs output from the LTS separating units 151-1, 151-2, and 151-3 in accordance with the output timing of the respective PID packets of the synthesized stream CTS.

The LCC adding unit 144 inserts and adds count information sequentially counted while skipping a particular count value to a count information adding area of each of the PID packets as an LCC (Local continuity counter) for each of the PID packets of the synthesized stream CTS output from the multiplexing unit 143. The count information adding area herein is constituted by a part of the synchronous byte area within the TS header of each of the PID packets. According to this embodiment, the particular count value is a value containing "1" for all the bit values. The particular count values are used by the common interface controller 104B which does not have the function for handling packet order switching based on count information, as will be described later.

The LCC adding unit 144 sequentially outputs the respective PID packets of the synthesized stream CTS containing LCCs added thereto in this manner to the CAM module 200. Each of the LCCs is count information for handling packet order switching which occurs within the CAM module 200, and is created and used at the time of addition of LCCs. The LCC adding unit 144 also adds LCCs added to the respective PID packets of the synthesized stream CTS as discussed above to LTSs output in correspondence with the respective PID packets from the multiplexing unit 143. The LCC adding unit 144 sequentially outputs the LTSs containing the added LCCs to the FIFO unit 147.

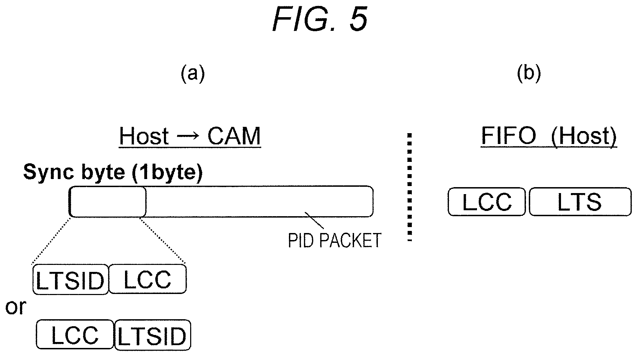

Fig. 5(a) illustrates insertion of LTSID and LCC into a synchronous byte (Sync byte) area within a TS header of a PID packet transmitted from the host device 100 (controller 104A, 104B) to the CAM module 200. Either LTSID or LCC may be located at the head. The bit areas of LTSID and LCC may be mixed. Fig. 5(b) illustrates addition of LCC to LTS supplied to the FIFO unit 147 within the host device 100 (controller 104A) for each of the PID packets.

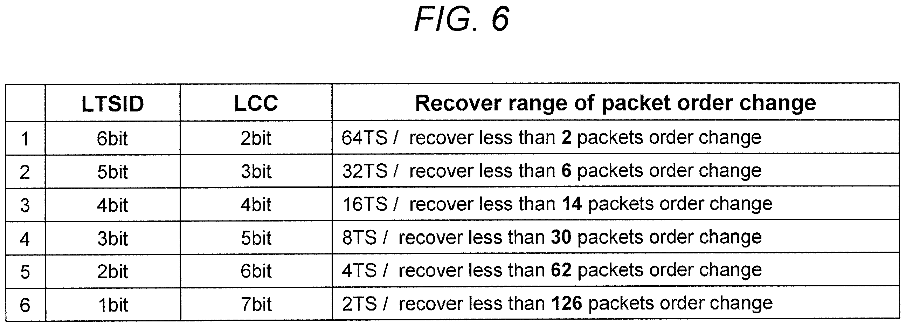

Fig. 6 illustrates an example of bit allocation of LTSID and LCC in a synchronous byte area. For example, when 6 bits and 2 bits are allocated to LTSID and LCC, respectively, identification of 64 transport streams is allowed, wherefore order change of 2 or fewer packets can be handled. On the other hand, when 5 bits and 3 bits are allocated to LTSID and LCC, respectively, for example, identification of 32 transport streams is allowed, wherefore order change of 6 or fewer packets can be handled. Furthermore, when 4 bits are allocated to both LTSID and LCC, for example, identification of 16 transport streams is allowed, wherefore order change of 14 or fewer packets can be handled.

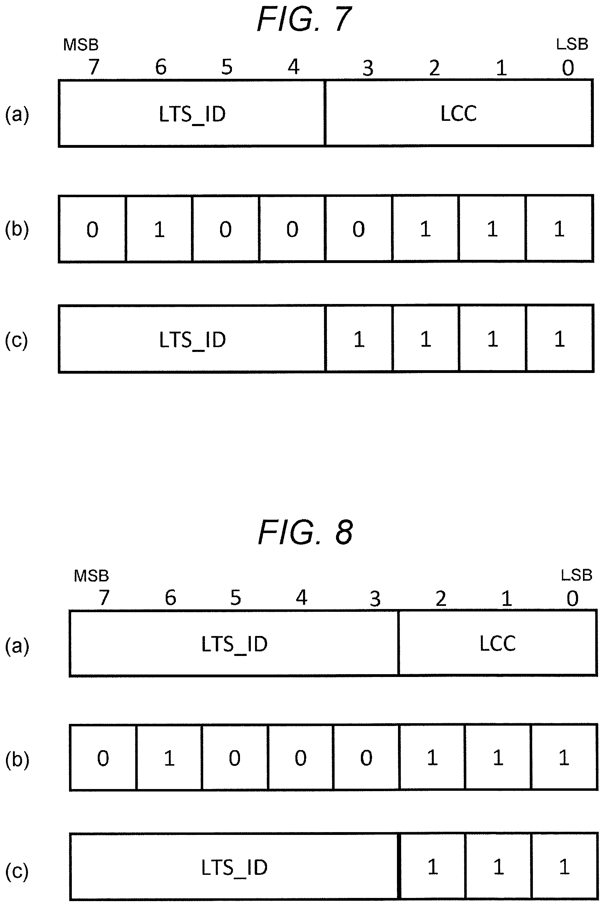

Fig. 7(a) illustrates an example of bit arrangement when 4 bits are allocated to both LTSID and LCC. According to this example, 4 bits of LTSID are located in high-order 4 bits, while 4 bits of LCC are located in low-order 4 bits. Fig. 7(b) shows respective bit values of a synchronous word (0 × 47) originally located in a synchronous byte area. Each of the sixth bit, second bit, first bit, and zeroth bit is "1", while each of the seventh bit, fifth bit, fourth bit, and third bit is "0".

Fig. 8(a) illustrates an example of bit arrangement when 5 bits and 3 bits are allocated to LTSID and LCC, respectively. According to this example, 5 bits of LTSID are located in high-order 5 bits, while 3 bits of LCC are located in low-order 3 bits. Fig. 8(b) shows respective bit values of a synchronous word (0 × 47) originally located in a synchronous byte area similarly to Fig. 7 (b) discussed above.

According to the examples of bit arrangement illustrated in Fig. 7(a) and Fig. 8(a), the respective bits of LTSID are successively located in the high-order bit side, while the respective bits of LCC are successively located on the low-order bit side. On the contrary, the respective bits of LCC may be located on the high-order bit side, while the respective bits of LTSID may be located on the low-order bit side. In addition, the respective bits of LTSID and LCC are not required to be successively located.

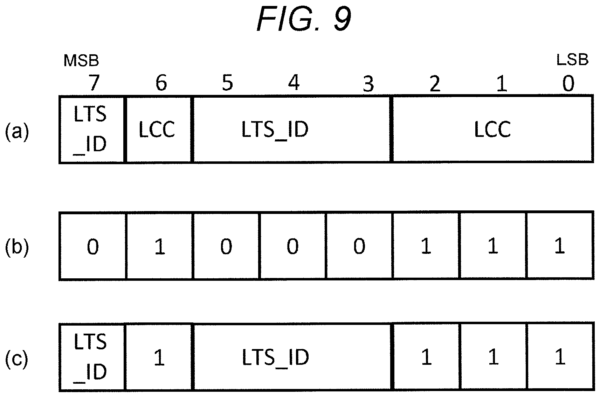

Fig. 9(a) illustrates an example of bit arrangement when 4 bits are allocated to both LTSID and LCC. According to this example, the respective bits of LTSID are located in the seventh bit, fifth bit, fourth bit, and third bit, while the respective bits of LCC are located in the sixth bit, second bit, first bit, and zeroth bit. Fig. 9(b) shows the respective bit values of a synchronous word (0 × 47) originally located in a synchronous byte area similarly to Fig. 7(b) discussed above.

Returning to Fig. 2, the FIFO unit 147 retains LTSs sequentially output from the LCC adding unit 144 and containing added LCCs for a certain period. The certain period herein is required to be at least time corresponding to the maximum delay time from reception to transmission of the synthesized stream CTS by the CAM module 200.

The FIFO unit 147 also outputs LTSs corresponding to the respective PID packets for each of the PID packets of the synthesized stream CTS received from the CAM module 200 as will be described later. In this case, the FIFO unit 147 refers to LCC inserted and added to the synchronous byte area within the header of each of the PID packets, and selectively outputs LTS to which LCC having the same value is added. This selective output allows output of LTSs corresponding to the respective PID packets even when an order change of PID packets, i.e., packet order switching, occurs within the CAM module 200.

The demultiplexing unit 145 receives the synthesized stream CTS from the CAM module 200. The demultiplexing unit 145 subsequently processes the respective PID packets of the received synthesized stream based on LTSs corresponding to the PID packets and output from the FIFO unit 147.

More specifically, the demultiplexing unit 145 distributes the respective PID packets of the received synthesized stream to respective streams based on LTSIDs inserted and added to the synchronous byte areas within the headers of the respective PID packets. The demultiplexing unit 145 subsequently locates the respective PID packets at time positions corresponding to LTSs in the respective streams to which the PID packets are distributed, so as to reconstitute the transport streams TS1, TS2, and TS3.

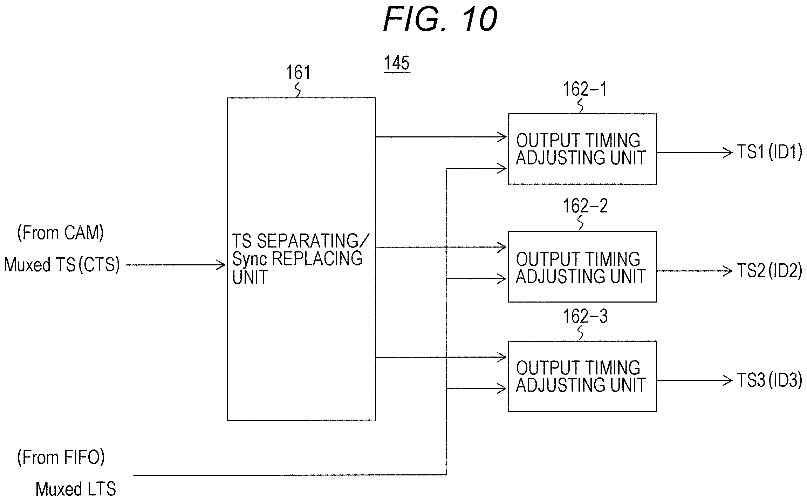

Fig. 10 illustrates a configuration example of the demultiplexing unit 145. The demultiplexing unit 145 includes a TS separating and Sync replacing unit 161, and output timing adjusting units 162-1, 162-2, and 162-3.

The TS separating and Sync replacing unit 161 distributes respective PID packets of a synthesized stream received from the CAM module 200 to respective streams based on LTSIDs added to the respective PID packets. The TS separating and Sync replacing unit 161 also replaces the bit values of the synchronous byte areas of the respective PID packets distributed to the corresponding streams with bit values of a synchronous word (0 × 47) at the FIFO unit 147.

The output timing adjusting units 162-1, 162-2, and 162-3 locate the respective PID packets at time positions in the respective streams in accordance with LTSs corresponding to the respective PID packets output from the FIFO unit 147. The output timing adjusting units 162-1, 162-2, and 162-3 subsequently output the reconstituted transport streams TS1, TS2, and TS3, respectively.

Returning to Fig. 2, the LCC extracting unit 146 extracts the LCC inserted into the synchronous byte area within the header of each of the PID packets from each of the PID packets of the received synthesized stream, and transmits the extracted LCC to the FIFO unit 147. As discussed above, the FIFO unit 147 refers to the received LCC, and selectively outputs LTS to which LCC having the same value is added.

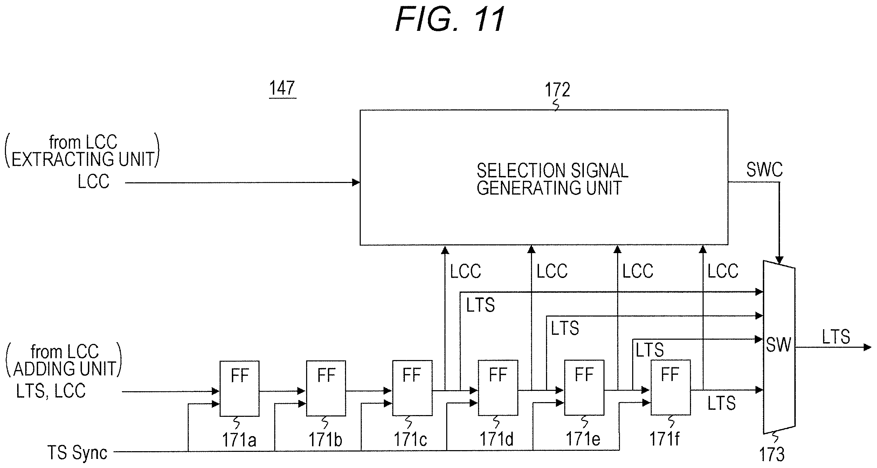

Fig. 11 illustrates an example of a detailed configuration of the FIFO unit 147. Discussed in this example is a case when LCC is 2-bit count information. The FIFO unit 147 includes series circuits of six flip-flops (latched circuits) 171a, 171b, 171c, 171d, 171e, and 171f, a selection signal generating unit 172, and a switch unit 173.

The six flip-flop series circuits constitute a processing information retaining unit. TS sync signals (TS Sync) are input as latch signals from the multiplexing (MUX) unit 143 to the respective flip-flops. The LTS and LCC input from the LCC adding unit 144 are sequentially shifted to and retained by the following flip-flops every time a TS sync signal (TS Sync) is input.

The switch unit 173 selectively outputs one LTS from the respective LTSs retained by the flip-flops 171c, 171d, 171e, and 171f. The selection signal generating unit 172 compares the LCC extracted by the LCC extracting unit 146 with each of the LCCs retained by the flip-flops 171c, 171d, 171e, and 171f, and transmits a selection signal SWC to the switch unit 173 to allow the switch unit 173 to output LTS to which LCC having the same value is added.

By the function of the FIFO unit 147 having the configuration illustrated in Fig. 11, the LTSs corresponding to PID packets are extracted and output for each of the PID packets of the received synthesized stream even when the order of the PID packets (2 packet or fewer) changes within the CAM module 200.

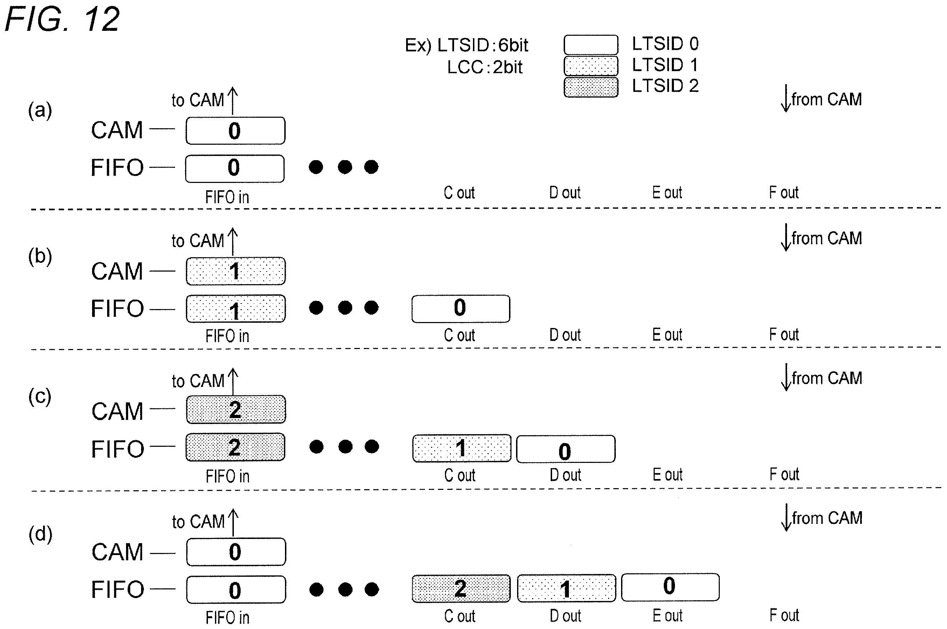

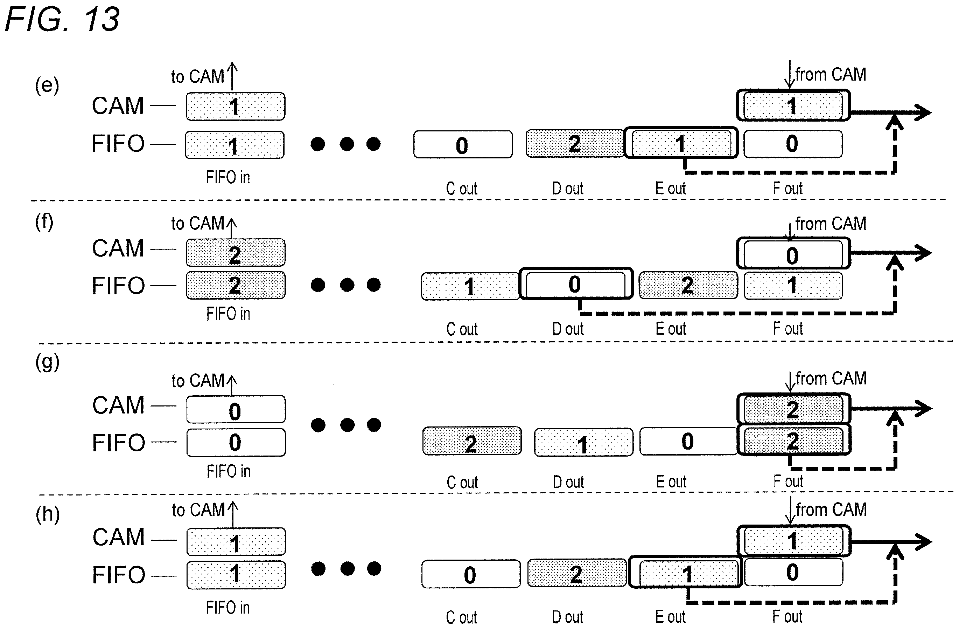

Figs. 12 and 13 schematically illustrate an operation example of the FIFO unit 147 having the configuration illustrated in Fig. 11. According to this example, LCC to which 2 bits are allocated is added to each of the PID packets of the synthesized stream CTS, and changes in the manner as "0", "1", "2", "0", "1", and further in this order at the input to the CAM module 200. As discussed above, the count value containing "1" for all the bit values is skipped, wherefore the value following "2" ("10" in binary digits) is not "3" ("11" in binary digits), but "0" ("00" in binary digits).

In addition, according to this example, 6 bits are allocated to LTSID, wherefore identification of 64 transport streams is allowed. This example handles the synthesized stream CTS obtained by synthesizing the respective PID packets of three transport streams LTSID 0, LTSID 1, and LTSID 2.

Figs. 12 and 13 show input to the flip-flop 171a (FIFO in), output from the flip-flop 171c (C out), output from the flip-flop 171d (D out), output from the flip-flop 171e (E out), and output from the flip-flop 171f (F out) for the line of the FIFO unit 147. On the other hand, Figs. 12 and 13 show input (to CAM) and output (from CAM) for the line of the CAM module 200. "Numerals" indicate values of LCC added to LTS for the line of the FIFO unit 147, and indicate values of LCC added to a PID packet for the line of the CAM module 200.

The values of LCC added to the PID packet as input to the CAM module 200 (to CAM) agree with the values of LCC added to LTS as input to the flip-flop 171a (FIFO in). The state switches in the manner shown in Figs. 12(a), (b), (c), (d) and further in this order, in accordance with input of the TS sync signal (TS Sync).

The state in Fig. 12 (d) subsequently switches to a state in Fig. 13(e). In this case, the value of LCC added to the PID packet as output from the CAM module 200 (from CAM) is "1". This value agrees with the value of LCC added to LTS as output from the flip-flop 171e (E out). Accordingly, the switch unit 173 of the FIFO unit 147 outputs LTS of the flip-flop 171e at this time based on the selection signal SWC.

The state in Fig. 13(e) subsequently shifts to a state in Fig. 13(f). In this case, the value of LCC added to the PID packet as output from the CAM module 200 (from CAM) is "0" (order change) . This value agrees with the value of LCC added to LTS as output from the flip-flop 171d (D out). Accordingly, the switch unit 173 of the FIFO unit 147 outputs LTS of the flip-flop 171d at this time based on the selection signal SWC.

The state in Fig. 13(f) subsequently shifts to a state in Fig. 13(g). In this case, the value of LCC added to the PID packet as output from the CAM module 200 (from CAM) is "2". This value agrees with the value of LCC added to LTS as output from the flip-flop 171f (F out). Accordingly, the switch unit 173 of the FIFO unit 147 outputs LTS of the flip-flop 171f at this time based on the selection signal SWC.

The state in Fig. 13(g) subsequently shifts to a state in Fig. 13(h). In this case, the value of LCC added to the PID packet as output from the CAM module 200 (from CAM) is "1". This value agrees with the value of LCC added to LTS as output from the flip-flop 171e (E out). Accordingly, the switch unit 173 of the FIFO unit 147 outputs LTS of the flip-flop 171e at this time based on the selection signal SWC. Thereafter, similar operations continue.

The operation of the common interface controller 104A illustrated in Fig. 2 is now described. The transport streams TS1, TS2, and TS3 supplied from the demodulators 103-1, 103-2, and 103-3 (see Fig. 1) are supplied to the LTS adding units 141-1, 141-2, and 141-3, respectively. The LTS adding units 141-1, 141-2, and 141-3 add LTSs (Local Time Stamps) corresponding to input time to the respective PID packets of the input transport streams TS1, TS2, and TS3 (TSP: transport stream packets), respectively.

The transport streams TS1, TS2, and TS3 containing the respective PID packets to each of which LTS is added are supplied to the PID filter units 142-1, 142-2, and 142-3, respectively. The PID filter units 142-1, 142-2, and 142-3 execute filtering for removing PID data packets of service channels not selected (channel-selected) from the transport streams TS1, TS2, and TS3.

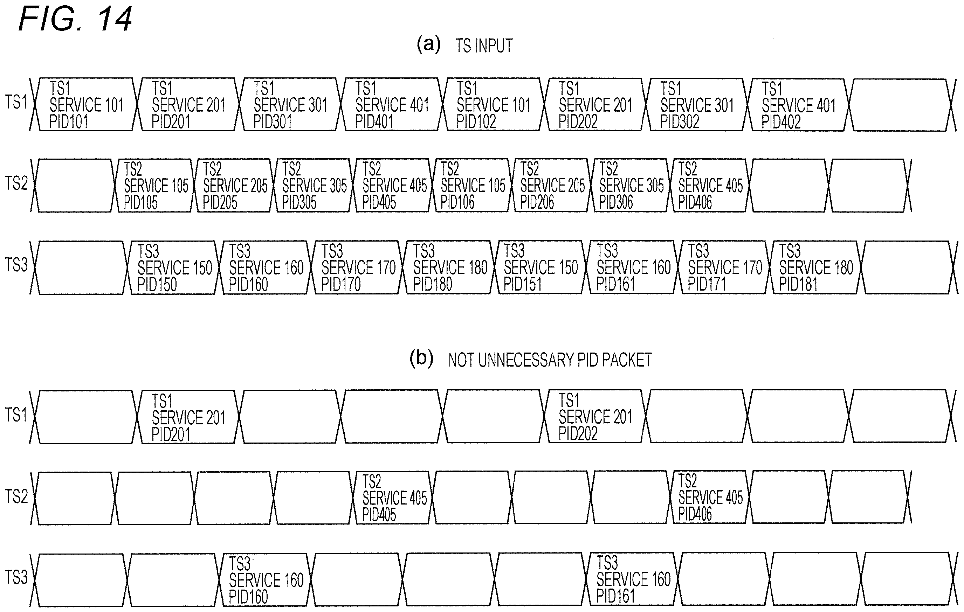

Fig. 14(a) illustrates a configuration example of the PID packets of the transport streams TS1, TS2, and TS3 supplied to the LTS adding units 141-1, 141-2, and 141-3. Fig. 14 (b) illustrates an example of PID packets (not unnecessary PID packets) remaining after filtering of the input in Fig. 14(a) by the PID filter units 142-1, 142-2, and 142-3.

Returning to Fig. 2, the filtered transport streams TS1, TS2, and TS3 are supplied to the multiplexing unit 143. The multiplexing unit 143 synthesizes respective PID packets of the transport streams TS1, TS2, and TS3 after removal of LTS to create the synthesized stream CTS.

In addition, the multiplexing unit 143 inserts and adds LTSID to the synchronous byte area within the TS header of each of the PID packets of the synthesized stream CTS thus created (see Figs. 5 (a) and 5 (b)). The multiplexing unit 143 also outputs LTSs (Local Time Stamps) corresponding to the PID packets in accordance with output timing of the respective PID packets of the synthesized stream CTS.

The synthesized stream CTS created by the multiplexing unit 143 is supplied to the LCC adding unit 144. The LTSs output from the multiplexing unit 143 are supplied to the LCC adding unit 144. The LCC adding unit 144 inserts and adds count information, as the LCC, which indicates a count value sequentially counted while skipping a particular count value, to a count information adding area provided in the synchronous byte area within the TS header of each of the PID packets for each of the PID packets of the synthesized stream CTS.

As discussed above, this LCC is count information for handling an order change of PID packets, i.e., packet order switching within the CAM module 200, and is created and used at the time of addition of LCC. The respective PID packets of the synthesized stream CTS to which LCCs are added in this manner are sequentially transmitted from the LCC adding unit 144 to the CAM module 200 via a common interface.

The LCC adding unit 144 also adds LCCs added to the respective PID packets of the synthesized stream CTS as described above to LTSs output from the multiplexing unit 143 in correspondence with the respective PID packets. The LTSs to which the LCCs are added in this manner are sequentially supplied to the FIFO unit 147.

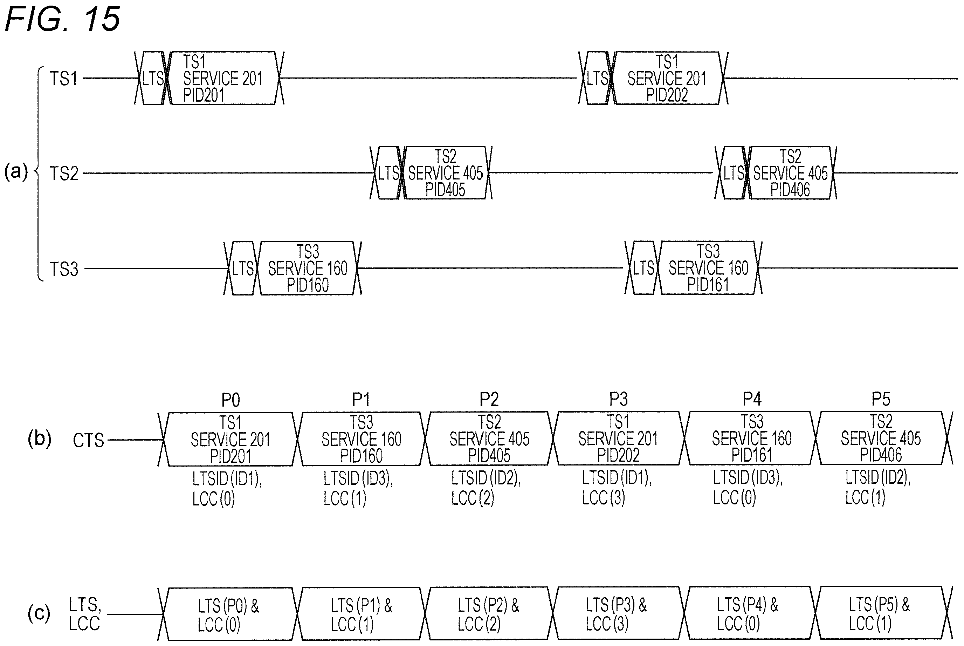

Fig. 15(a) illustrates an example of the PID packets of the respective transport streams TS1, TS2, and TS3 supplied from the PID filter units 142-1, 142-2, and 142-3 to the multiplexing unit 143. Each of the PID packets contains LTS added thereto.

Fig. 15 (b) illustrates an example of arrangement of the respective PID packets of the synthesized streams CTS sequentially output from the LCC adding unit 144 to the CAM module 200. Fig. 15(c) illustrates an example of arrangement of LTSs containing LCCs added thereto and sequentially output from the LCC adding unit 144 to the FIFO unit 147.

LTSID and LCC are added to each of the PID packets of the synthesized stream CTS. LTSID (ID1) is LTSID indicating that the original transport stream is the transport stream TS1. LTSID (ID2) is LTSID indicating that the original transport stream is the transport stream TS2. LTSID (ID3) is LTSID indicating that the original transport stream is the transport stream TS3.

The respective PID packets of the synthesized streams sequentially received from the CAM module 200 via the common interface are transmitted to the demultiplexing unit 145 via the LCC extracting unit 146. The LCC extracting unit 146 extracts LCC inserted into the synchronous byte area within the header for each of the PID packets of the received synthesized stream, and transmits the extracted LCCs to the FIFO unit 147.

The FIFO unit 147 retains LTSs sequentially output from the LCC adding unit 144 and containing LCCs added to the LTSs for a certain period. In this case, the LTSs are retained at least for a time corresponding to the maximum delay time from reception to transmission of the synthesized stream CTS by the CAM module 200.

The FIFO unit 147 subsequently outputs LTSs corresponding to the respective PID packets for each of the PID packets of the synthesized stream CTS received from the CAM module 200. More specifically, the FIFO unit 147 in this case refers to LCC extracted by the LCC extracting unit 146 and inserted and added to the synchronous byte area of the header of each of the PID packets, and selectively outputs LTS to which LCC having the same value is added (see FIGS. 11 through 13).

The respective LTSs sequentially output from the FIFO unit 147 are transmitted to the demultiplexing unit 145. The demultiplexing unit 145 processes the respective PID packets of the received synthesized stream based on the added LTSIDs, and LTSs output from the FIFO unit 147 and corresponding to the respective PID packets.

More specifically, the demultiplexing unit 145 distributes the respective PID packets of the received synthesized stream to respective streams in accordance with LTSIDs. The demultiplexing unit 145 also adjusts output timing such that the respective PID packets can be located at time positions in accordance with LTSs corresponding to the respective PID packets, and obtains the reconstituted transport streams TS1, TS2, and TS3.

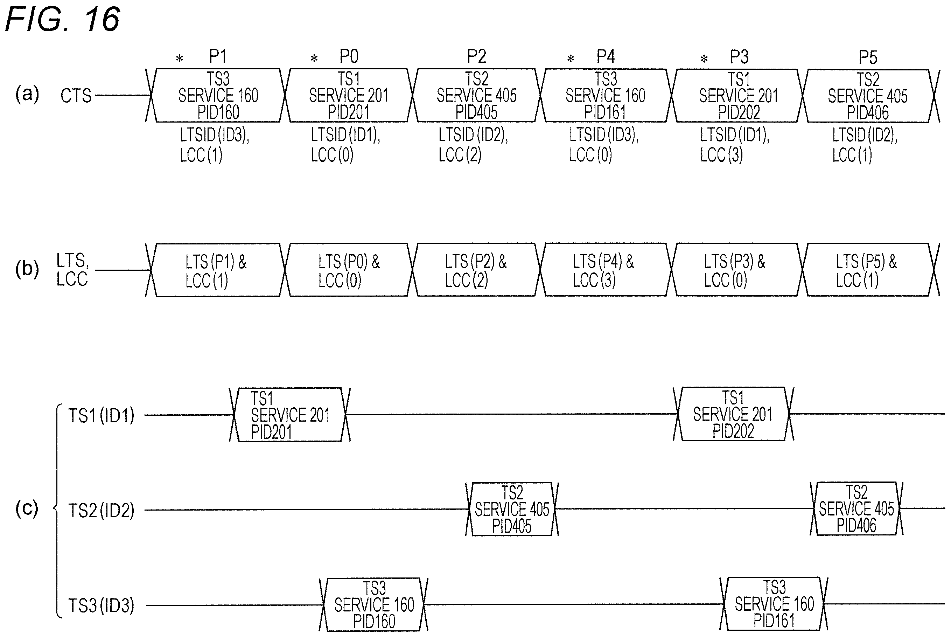

Fig. 16(a) illustrates an example of the respective PID packets of the synthesized streams CTS sequentially input to the demultiplexing unit 145 from the CAM module 200 via the common interface (Fig. 16(a) corresponds to Fig. 15(b), but is different therefrom in the parts to which marks "*" are added).

Fig. 16(b) illustrates an example of the LTSs sequentially transmitted from the FIFO unit 147 to the demultiplexing unit 145 at the input timing of the respective PID packets of the synthesized stream CTS (Fig. 16(b) corresponds to Fig. 15(c), but the order is changed in accordance with order switching of the PID packets). In practical situations, LCCs are not contained herein, but are shown in the figure for comparison with the LCCs added to the PID packets.

FIG. 16 (c) illustrates an example of the respective PID packets of the transport streams TS1, TS2, and TS3 reconstituted and output from the demultiplexing unit 145.

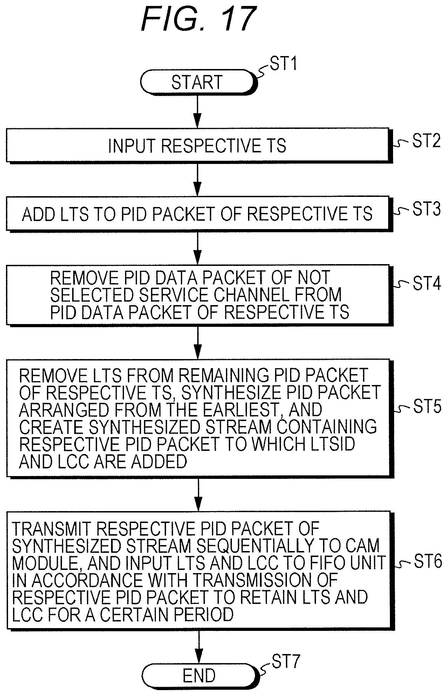

A flowchart shown in Fig. 17 shows an example of processing procedures executed by the common interface controller 104A for synthesizing the respective PID packets of the transport streams TS1, TS2, and TS3 to create the synthesized stream CTS, and transmitting the created synthesized stream CTS to the CAM module 200.

The controller 104A starts processing in step ST1, and then shifts to a process in step ST2. In this step ST2, the controller 104A inputs the transport streams TS1, TS2, and TS3. The controller 104A adds LTSs to the PID packets of each of the transport streams in step ST3.

Then, the controller 104A removes PID data packets of service channels not selected (channel-selected) in the respective transport streams in step ST4. The controller 104A subsequently arranges the remaining PID packets (PID packets after LTS removal) in the order from the earliest PID packet on a time basis to create a synthesized stream in step ST5. At this time, the controller 104A adds LTSID and LCC to each of the PID packets. The LCC in this case is count information sequentially counted while skipping a particular count value.

Then, the controller 104A sequentially transmits the respective PID packets of the synthesized stream CTS to the CAM module 200 at a clock rate necessary for successive transmission in step ST6. In this step ST6, the controller 104A also inputs LTSs to which LCCs are added to the FIFO unit 147 in accordance with transmission of the respective PID packets, and allows the FIFO unit 147 to retain the LTSs for a certain period. After the process in step ST6, the controller 104A ends the processing in step ST7.

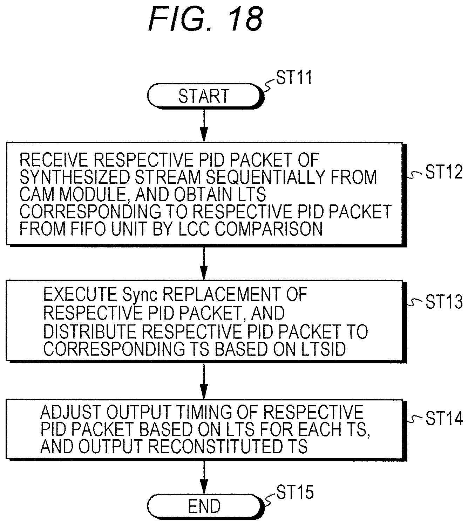

A flowchart in Fig. 18 shows an example of processing procedures executed by the common interface controller 104A for receiving the synthesized stream CTS from the CAM module 200, and reconstituting the transport streams TS1, TS2, and TS3.

The controller 104A starts processing in step ST11, and then shifts to a process in step ST12. In this step ST12, the controller 104A sequentially receives the respective PID packets of the synthesized stream CTS from the CAM module 200. The controller 104A also obtains LTSs corresponding to the respective PID packets from the FIFO unit 147.

Then, the controller 104A executes Sync replacement of the respective PID packets of the synthesized stream CTS, and also distributes the respective PID packets to corresponding streams based on LTSIDs added to the respective PID packets in step ST13. The controller 104A subsequently outputs the respective PID packets for each stream while adjusting output timing based on LTSs selectively output from the FIFO unit 147 with reference to LCCs added to the respective PID packets in step ST14. By this method, the controller 104A outputs the reconstituted transport streams TS1, TS2, and TS3. After the process in step ST14, the controller 104A ends processing in step ST15.

The controller 104A executes the foregoing transmitting process shown in the flowchart in Fig. 17, and the foregoing receiving process shown in the flowchart in Fig. 18 in parallel, and repeats the respective processes cyclically.

As described above, the controller 104A illustrated in Fig. 2 executes addition of LCC corresponding to count information sequentially counted while skipping a particular count value, for each of the PID packets of the synthesized stream CTS transmitted to the CAM module 200. In this case, LCC is added to both a part of the synchronous byte area as a count information adding area provided for each of the PID packets, and LTS output in accordance with the corresponding PID packet.

By adding LCC to each of the PID packets of the synthesized stream CTS transmitted to the CAM module 200, the controller 104A can notify the CAM module 200 that the controller 104A has a function for handling packet order switching based on count information, and that packet order switching is thus allowed.

In addition, the controller 104A can obtain LTS corresponding to each of the PID packets from the FIFO unit 147 based on LCC added to the synchronous byte area within the header of the corresponding PID packet of the received synthesized stream CTS. Accordingly, the respective PID packets can be appropriately processed based on the corresponding LTSs even in the case of receiving from the CAM module 200 the synthesized stream CTS containing PID packets arranged in a different order from the order at the time of transmission.

### "Example of Not Having Function for Handling Packet Order Switching"

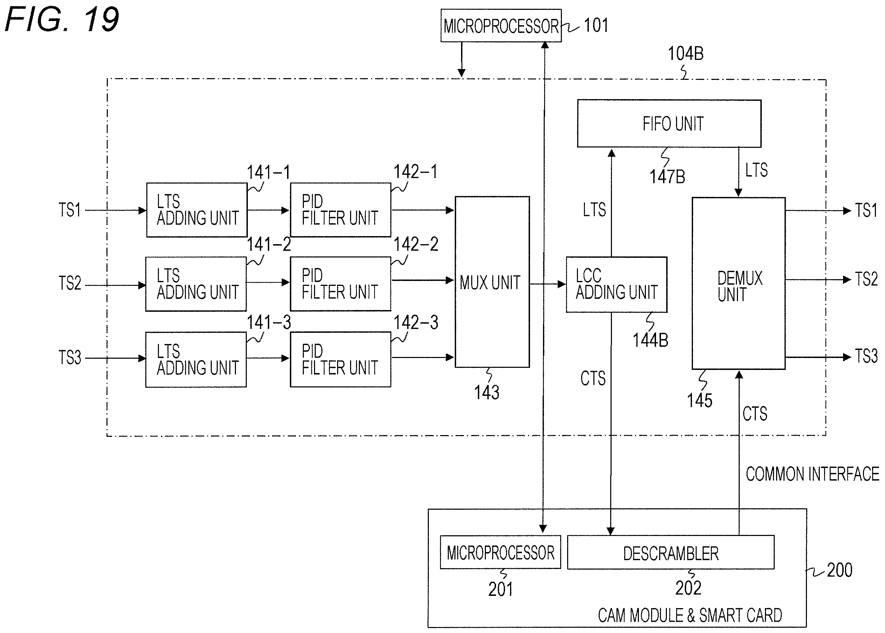

Discussed hereinafter is the common interface controller 104B which does not have a function for handling packet order switching based on count information, and does not allow packet order switching at the CAM module 200. Fig. 19 illustrates a configuration example of the controller 104B. Parts in Fig. 19 corresponding to the parts in Fig. 2 are given similar reference numbers, and the detailed explanation of these parts are not repeated when appropriate.

The controller 104B includes the LTS (Local Time Stamp) adding units 141-1, 141-2, and 141-3, and the PID filter (PID filter) units 142-1, 142-2, and 142-3. The controller 104B further includes the multiplexing (MUX) unit 143, a LCC (Local Continuity Counter) adding unit 144B, the demultiplexing (DEMUX) unit 145, and a FIFO (First In First Out) unit 147B.

The LCC adding unit 144B inserts and adds a particular count value to a count information addition area as LCC (Local continuity counter) for each of the PID packets of the synthesized stream CTS output from the multiplexing unit 143. As discussed in the description of the controller 104A (see Fig. 2), the count information adding area is constituted by a part of the synchronous byte area within the TS header of each of the PID packets . The particular count value is a value containing "1" for all the bit values.

Fig. 7(c) illustrates an example in which each bit of LCC is set to 1 in a state of high-order 4 bits of the synchronous byte area allocated to LTSID, and low-order 4 bits allocated to LCC. In this case, the low-order 4 bits of a synchronous word (0 × 47) are "0111" as illustrated in Fig. 7(b), wherefore the LCC adding unit 144B rewrites the third bit of the synchronous byte area from "0" to "1", and maintains the bits from the second to the zero at "1" without change.

Fig. 8(c) illustrates an example in which each bit of LCC is set to 1 in a state of high-order 5 bits of the synchronous byte area allocated to LTSID, and low-order 3 bits allocated to LCC. In this case, the low-order 3 bits of a synchronous word (0 × 47) are "111" as illustrated in Fig. 8(b), wherefore the LCC adding unit 144B maintains the bits from the second to the zero at "1" without change.

Fig. 9(c) illustrates an example in which each bit of LCC is set to 1 in a state of the seventh bit, fifth bit, fourth bit, and third bit of the synchronous byte area allocated to LTSID, and sixth bit, second bit, first bit, and zero bit allocated to LCC. In this case, each of the sixth bit, second bit, first bit, and zero bit of a synchronous word (0 × 47) is "1" as illustrated in Fig. 9(b), wherefore the LCC adding unit 144B maintains the sixth bit, second bit, first bit, and zeroth bit second bit at "1" without change.

The LCC adding unit 144B sequentially outputs the respective PID packets of the synthesized stream CTS containing LCCs added thereto to the CAM module 200. Each of the LCCs is information for notifying the CAM module 200 that the controller 104B does not have the function for handling packet order switching based on count information. Unlike the LCC adding unit 144 of the foregoing controller 104A (see Fig. 2), the LCC adding unit 144B does not add LCC to LTS output in accordance with each of the PID packets from the multiplexing unit 143. The LCC adding unit 144B sequentially transmits LTS corresponding to each of the PID packets and not containing LCC to the FIFO unit 147B in accordance with sequential transmission of the respective PID packets of the synthesized stream CTS to the CAM module 200.

The FIFO unit 147B retains LTSs sequentially output from the LCC adding unit 144B for a certain period, and outputs the LTSs after retention. The certain period herein is set to time corresponding to the delay time from reception to transmission of the synthesized stream CTS by the CAM module 200. The microprocessor 101 communicates with the CAM module 200 to obtain information on the delay time at the CAM module 200, and controls the retention time at the FIFO unit 147B based on this information. By this method, the FIFO unit 147B outputs LTSs corresponding to the PID packets for each of the PID packets of the synthesized stream CTS received from the CAM module 200.

The CAM module 200 recognizes that the controller 104B does not have the function for handling packet order switching based on count information from the fact that the LCC inserted and added to the synchronous byte area within the header of each of the PID packets of the synthesized stream CTS has a particular count value. In this case, the CAM module 200 operates such that packet order switching does not occur. Accordingly, the respective PID packets of the synthesized stream input to the CAM module 200 are sequentially output from the CAM module 200 with a certain delay time and in the packet order kept unchanged.

The demultiplexing unit 145 receives the synthesized stream CTS from the CAM module 200. The demultiplexing unit 145 subsequently processes each of the PID packets of the received synthesized stream based on LTSs corresponding to the respective PID packets output from the FIFO unit 147B. More specifically, the demultiplexing unit 145 distributes the respective PID packets of the received synthesized stream to respective streams based on LTSIDs inserted and added to the synchronous byte areas within the headers of the respective PID packets.

The demultiplexing unit 145 subsequently locates the respective PID packets at time positions corresponding to LTSs in the respective streams to which the PID packets are distributed, so as to reconstitute the transport streams TS1, TS2, and TS3. Other parts of the controller 104B illustrated in Fig. 19, which are not detailed herein, have configurations similar to the corresponding parts of the controller 104A illustrated in Fig. 2.

The operation of the common interface controller 104B illustrated in Fig. 19 is now described. The transport streams TS1, TS2, and TS3 supplied from the demodulators 103-1, 103-2, and 103-3 (see Fig. 1) are supplied to the LTS adding units 141-1, 141-2, and 141-3, respectively. The LTS adding units 141-1, 141-2, and 141-3 add LTSs (Local Time Stamps) corresponding to input time to the respective PID packets of the input transport streams TS1, TS2, and TS3 (TSP: transport stream packets), respectively.

The transport streams TS1, TS2, and TS3 containing the respective PID packets to each of which LTS is added are supplied to the PID filter units 142-1, 142-2, and 142-3, respectively. The PID filter units 142-1, 142-2, and 142-3 execute filtering for removing PID data packets of service channels not selected (channel-selected) from the transport streams TS1, TS2, and TS3.

Fig. 14(a) illustrates a configuration example of the PID packets of the transport streams TS1, TS2, and TS3 supplied to the LTS adding units 141-1, 141-2, and 141-3. Fig. 14 (b) illustrates an example of PID packets (not unnecessary PID packets) remaining after filtering of the input in Fig. 14(a) by the PID filter units 142-1, 142-2, and 142-3.

Returning to Fig. 19, the transport streams TS1, TS2, and TS3 after filtering are supplied to the multiplexing unit 143. The multiplexing unit 143 synthesizes respective PID packets of the transport streams TS1, TS2, and TS3 after removal of LTS to create the synthesized stream CTS.

In addition, the multiplexing unit 143 inserts and adds LTSID to the synchronous byte area within the TS header of each of the PID packets of the synthesized stream CTS thus created (see Figs. 5 (a) and 5 (b)). The multiplexing unit 143 also outputs LTSs (Local Time Stamps) corresponding to the PID packets in accordance with output timing of the respective PID packets of the synthesized stream CTS.

The synthesized stream CTS created by the multiplexing unit 143 is supplied to the LCC adding unit 144B. The LTSs output from the multiplexing unit 143 are supplied to the LCC adding unit 144B.

The LCC adding unit 144B inserts and adds, as the LCCs, a particular count value (such as value having "1" for all bits) to a count information adding area provided in the synchronous byte area within the TS header of each of the PID packets for each of the PID packets of the synthesized stream CTS. The respective PID packets of the synthesized stream CTS to which LCCs are added in this manner are sequentially transmitted from the LCC adding unit 144B to the CAM module 200 via a common interface.

The LTSs corresponding to the respective PID packets are sequentially transmitted from the LCC adding unit 144B to the FIFO unit 147B in accordance with sequential transmission of the respective PID packets of the synthesized stream CTS to the CAM module 200. Accordingly, LCCs are not added to the LTSs transmitted to the FIFO unit 147B.

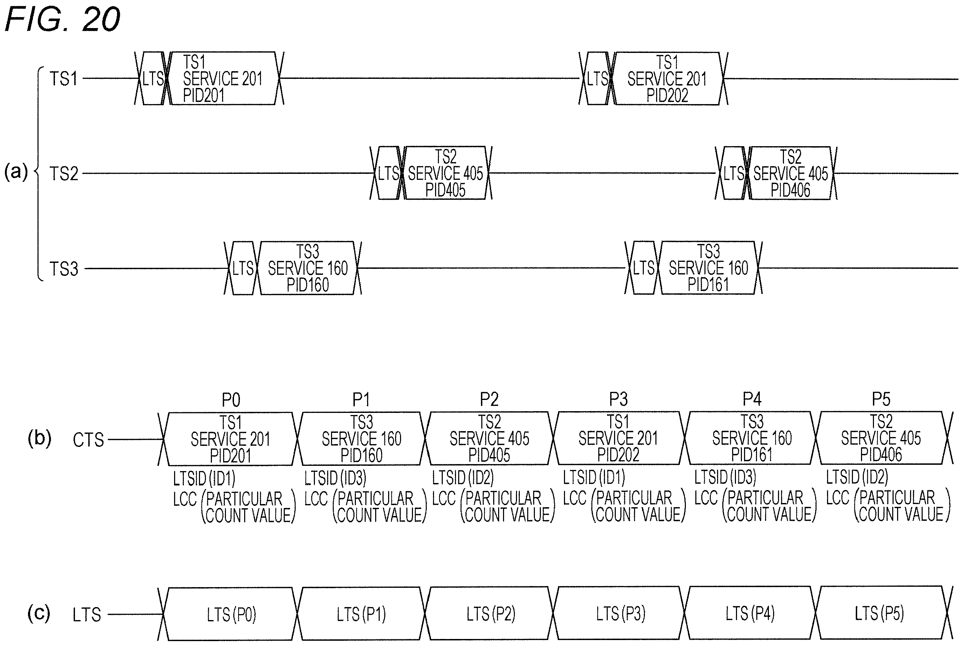

Fig. 20 (a) illustrates an example of the respective PID packets of the respective transport streams TS1, TS2, and TS3 supplied from the PID filter units 142-1, 142-2, and 142-3 to the multiplexing unit 143. Each of the PID packets contains LTS added thereto.

Fig. 20 (b) illustrates an example of arrangement of the respective PID packets of the synthesized stream CTS sequentially output from the LCC adding unit 144B to the CAM module 200. Fig. 20(c) illustrates an example of arrangement of LTSs sequentially output from the LCC adding unit 144B to the FIFO unit 147B.

LTSID and LCC (particular count value) are added to each of the PID packets of the synthesized stream CTS. LTSID (ID1) is LTSID indicating that the original transport stream is the transport stream TS1. LTSID (ID2) is LTSID indicating that the original transport stream is the transport stream TS2. LTSID (ID3) is LTSID indicating that the original transport stream is the transport stream TS3.

The respective PID packets of the synthesized stream sequentially received from the CAM module 200 via the common interface are transmitted to the demultiplexing unit 145. As discussed above, the CAM module 200 recognizes that the controller 104B does not have the function for handling packet order switching based on count information from the fact that each of the LCCs inserted and added to the respective PID packets of the synthesized stream CTS is a particular count value.

The CAM module 200 is operated such that packet order switching does not occur. Accordingly, the packet order of the respective PID packets of the synthesized stream CTS output from the CAM module 200 does not change from the packet order of the respective PID packets of the synthesized stream CTS input to the CAM module 200.

The LTSs sequentially output from the LCC adding unit 144B are transmitted from the FIFO unit 147B to the demultiplexing unit 145 with delay corresponding to the time from reception to transmission of the synthesized stream CTS by the CAM module 200. By this method, the demultiplexing unit 145 receives supply of the respective LTSs corresponding to the PID packets in accordance with supply of the respective PID packets of the synthesized stream CTS received from the CAM module 200.

The demultiplexing unit 145 processes the respective PID packets of the received synthesized stream based on the added LTSIDs, and further on the LTSs corresponding to the PID packets and output from the FIFO unit 147B. More specifically, the demultiplexing unit 145 distributes the respective PID packets of the received synthesized stream to respective streams in accordance with LTSIDs. The demultiplexing unit 145 also adjusts output timing such that the respective PID packets can be located at time positions in accordance with LTSs corresponding to the respective PID packets, and obtains the reconstituted transport streams TS1, TS2, and TS3.

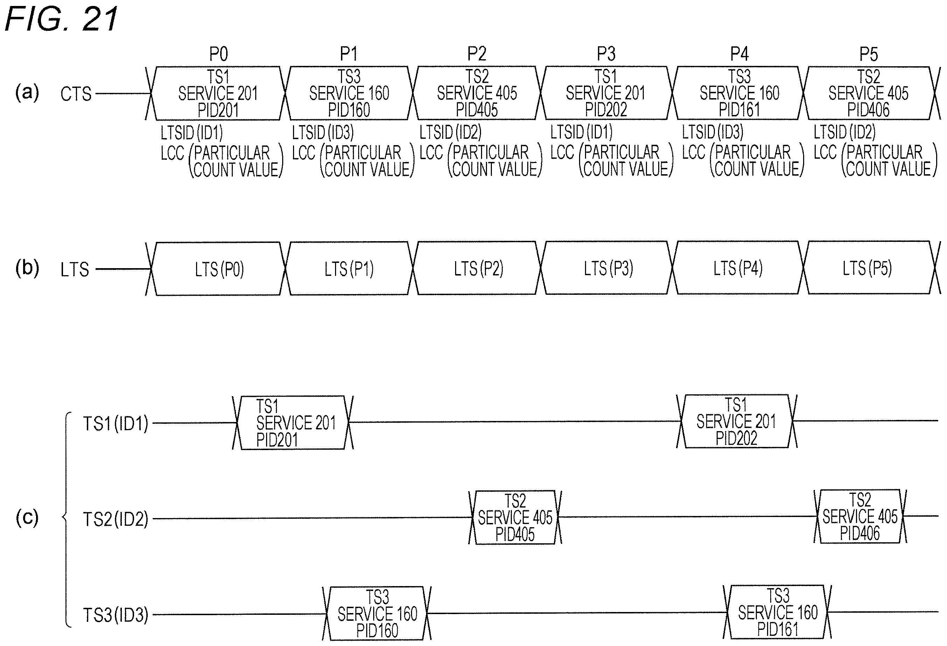

Fig. 21(a) illustrates an example of the respective PID packets of the synthesized stream CTS sequentially input from the CAM module 200 to the demultiplexing unit 145 via the common interface. Fig. 21(a) in this example corresponds to Fig. 20(b), but the packet order is maintained at the CAM module 200, wherefore packet order switching does not occur in this example.

Fig. 21(b) illustrates an example of the respective LTSs sequentially transmitted from the FIFO unit 147B to the demultiplexing unit 145 at the timing of input of the respective PID packets of the synthesized stream CTS (corresponds to Fig. 20(c)). Fig. 21(c) illustrates an example of the respective PID packets of the transport streams TS1, TS2, and TS3 reconstituted and output from the demultiplexing unit 145.

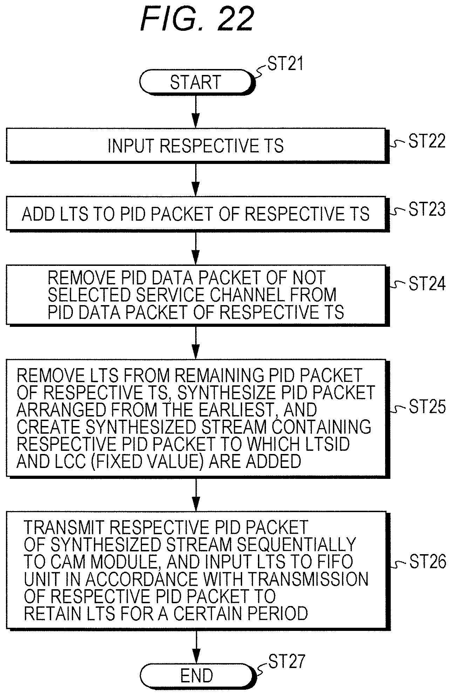

A flowchart in Fig. 22 shows an example of processing procedures executed by the common interface controller 104B for synthesizing the respective PID packets of the transport streams TS1, TS2, and TS3 to create the synthesized stream CTS, and transmitting the synthesized stream CTS to the CAM module 200.

The controller 104B starts processing in step ST21, and then shifts to a process in step ST22. In this step ST22, the controller 104B inputs the transport streams TS1, TS2, and TS3. The controller 104B adds LTSs to the PID packets of each of the transport streams in step ST23.

Then, the controller 104B removes PID data packets of service channels not selected (channel-selected) in the respective transport streams in step ST24. The controller 104B subsequently arranges the remaining PID packets (PID packets after LTS removal) in the order from the earliest PID packet on a time basis to create a synthesized stream in step ST25. At this time, the controller 104B adds LTSID and LCC to each of the PID packets. The LCC in this case is a particular count value (fixed value).

Then, the controller 104B sequentially transmits the respective PID packets of the synthesized stream CTS to the CAM module 200 at a clock rate necessary for successive transmission in step ST26. In this step ST26, the controller 104B also inputs LTSs corresponding to the PID packets to the FIFO unit 147B in accordance with transmission of the respective PID packets, and allows the FIFO unit 147B to retain the LTSs for a certain period. After the process in step ST26, the controller 104B ends the processing in step ST7.

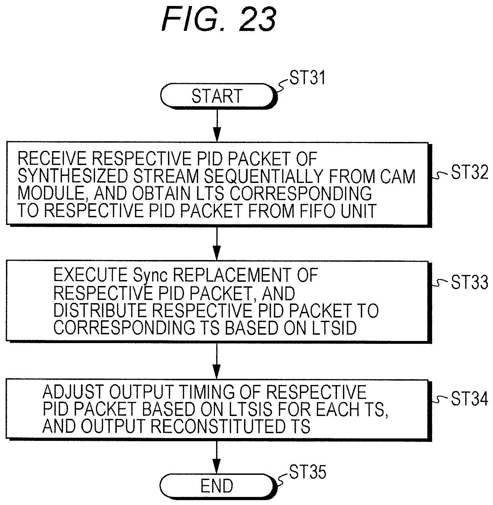

A flowchart in Fig. 23 shows an example of processing procedures executed by the common interface controller 104B for receiving the synthesized stream CTS from the CAM module 200, and reconstituting the transport streams TS1, TS2, and TS3.

The controller 104B starts processing in step ST31, and then shifts to a process in step ST32. In this step ST32, the controller 104B sequentially receives the respective PID packets of the synthesized stream CTS from the CAM module 200. The controller 104B also obtains LTSs corresponding to the respective PID packets from the FIFO unit 147B.

Then, the controller 104B executes Sync replacement of the respective PID packets of the synthesized stream CTS, and also distributes the respective PID packets to corresponding streams based on LTSIDs added to the respective PID packets in step ST33. The controller 104B subsequently outputs the respective PID packets for each stream while adjusting output timing based on corresponding LTSs output from the FIFO unit 147B in step ST34. By this method, the controller 104B outputs the reconstituted transport streams TS1, TS2, and TS3. After the process in step ST34, the controller 104B ends processing in step ST35.

The controller 104B executes the foregoing transmitting process shown in the flowchart in Fig. 22, and the foregoing receiving process shown in the flowchart in Fig. 23 in parallel, and repeats the respective processes cyclically.

As described above, the controller 104B illustrated in Fig. 19 adds the particular count value to the count information adding area as LCC for each of the PID packets of the synthesized stream CTS transmitted to the CAM module 200. By this method, the controller 104B can notify the CAM module 200 that the controller 104B does not have the function for handling packet order switching based on count information, and that packet order switching is thus not allowed.

By notifying the CAM module 200 that packet order switching is not allowed as discussed above, the controller 104B receives from the CAM module 200 the synthesized stream CTS having the same packet order of PID packets as the packet order at the time of transmission. In addition, the FIFO unit 147B outputs the LTSs with delay of time corresponding to the time from reception to transmission of the synthesized stream CTS by the CAM module 200. Accordingly, the respective PID packets of the synthesized stream CTS can be appropriately processed based on the corresponding LTSs.

### [Configuration Example of CAM Module]

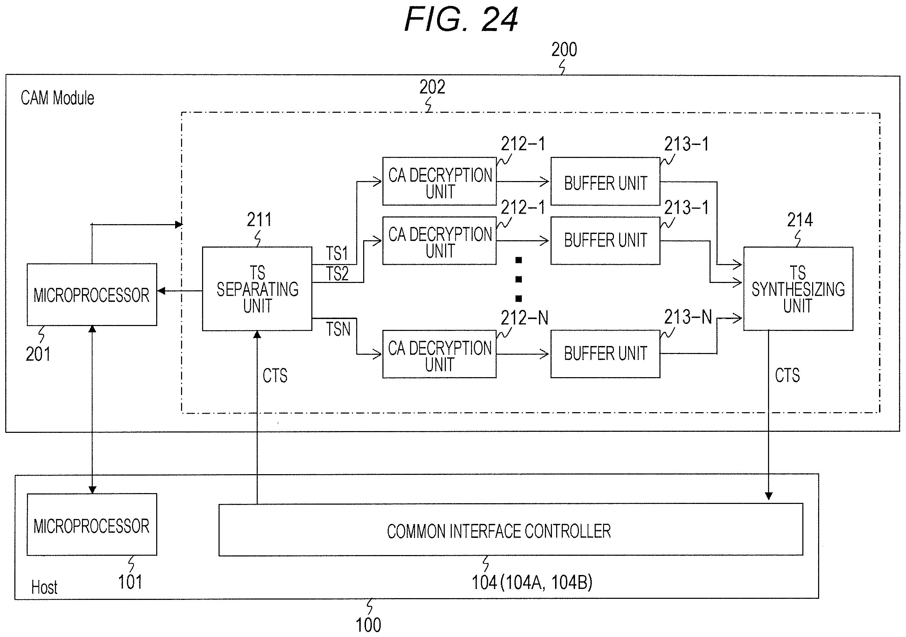

The detailed configuration of the CAM module 200 is now described. Fig. 24 illustrates a configuration example of the CAM module 200. The CAM module 200 includes the microprocessor 201 and the descrambler 202 as discussed above (see Fig. 1).

The microprocessor 201 executes necessary communication with the microprocessor 101 of the host device 100, and controls operation of the descrambler 202. The descrambler 202 receives the synthesized stream CTS transmitted from the common interface controller 104 (104A, 104B) of the host device 100 via a common interface, and descrambles the synthesized stream CTS. The descrambler 202 subsequently transmits the descrambled synthesized stream CTS to the controller 104 of the host device 100.

The descrambler 202 includes a TS separating unit 211, N CA decryption units 212-1 through 212-N, N buffer units 213-1 through 213-N, and a TS synthesizing unit 214. The TS separating unit 211 receives the synthesized stream CTS transmitted from the controller 104 of the host device 100. The TS separating unit 211 subsequently distributes the respective PID packets of the synthesized stream CTS to respective streams TS1 through TSN based on LTSID inserted and added to the synchronous byte area within the header of each of the PID packets (see Figs. 5(a) and 5(b)).

The TS separating unit 211 also extracts LCC inserted and added to a count information area, i.e., a part of the synchronous byte area within the header (see Figs. 5(a) and 5(b)) in each of the PID packets of the synthesized stream CTS, and transmits the extracted LCC to the microprocessor 201. As discussed above, this LCC is count information sequentially counted while skipping a particular count value when the synthesized stream CTS is transmitted from the controller 104A having the function for handling packet order switching based on count information (see Fig. 2). In this case, the microprocessor 201 recognizes that the controller 104 to transmit the synthesized stream CTS is the controller 104A having the function for handling packet order switching based on count information, and that packet order switching is thus allowed.

On the other hand, when the synthesized stream CTS is transmitted from the controller 104B which does not have the function for handling packet order switching based on count information (see Fig. 19), the LCC has a particular count value. In this case, the microprocessor 201 recognizes that the controller 104 to transmit the synthesized stream CTS is the controller 104B not having the function for handling packet order switching based on count information, and that packet order switching is thus not allowed.

The microprocessor 201 controls operation of the descrambler 202, particularly operation of buffering and synthesis of the respective PID packets based on recognition of whether or not packet order switching by LCC as above is allowed. This control operation will be detailed later.

Each of the CA decryption units 212-1 through 212-N decrypts the PID packets of the corresponding streams. The CA decryption units used herein are not all the CA decryption units 212-1 through 212-N, but only a part of the CA description units corresponding to the number of streams contained in the synthesized stream CTS. The buffer units 213-1 through 213-N buffer the PID packets decrypted by the CA decryption units 212-1 through 212-N.

The TS synthesizing unit 214 synthesizes the PID packets of the respective streams buffered by the buffer units 213-1 through 213-N to create the synthesized stream CTS, and transmits the synthesized stream CTS to the controller 104 of the host device 100.

The operation control of buffering and synthesis of the respective PID packets executed by the microprocessor 201 is now described. When recognizing that the packet order switching is allowed based on LCCs as discussed above, the microprocessor 201 controls buffering and synthesis of the respective PID packets such that the PID packets of the respective decrypted streams can be synthesized in the decrypting order.

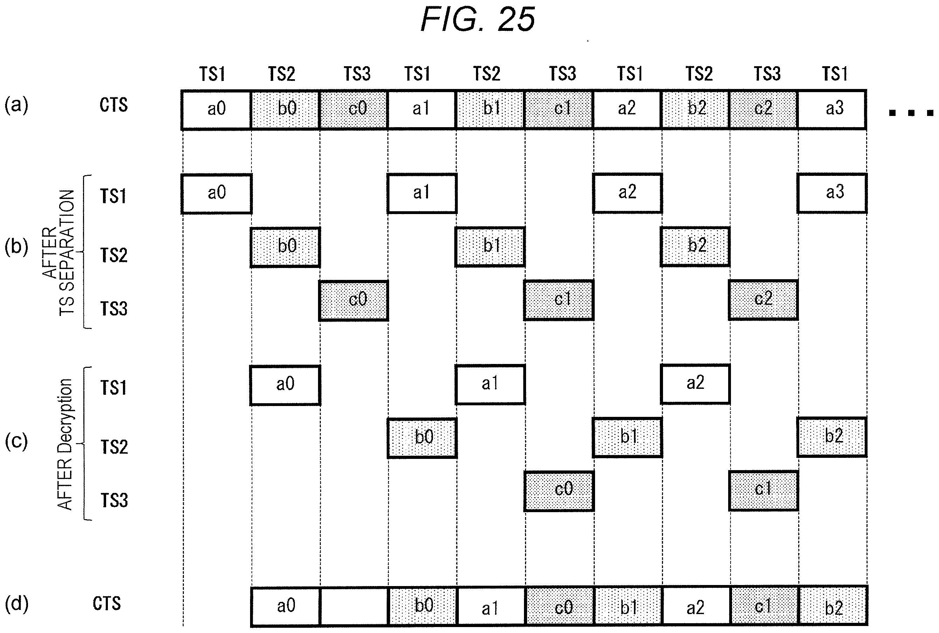

Figs. 25(a) to 25(d) are timing charts when the synthesized stream CTS received by the TS separating unit 211 is transmitted from the controller 104A having the function for handling packet order switching based on count information.

Fig. 25(a) shows the synthesized stream CTS received by the TS separating unit 211. In this figure, a0, a1, a2, and others represent PID packets of the transport stream TS1. Moreover, b0, b1, b2, and others represent PID packets of the transport stream TS2. Furthermore, c0, c1, c2, and others represent PID packets of the transport stream TS3.

Fig. 25(b) shows PID packets of the streams TS1, TS2, and TS3 separated by the TS separating unit 211. Fig. 25(c) shows the PID packets of the streams TS1, TS2, and TS3 decrypted by the CA decryption units 212-1, 212-2, and 212-3.

Fig. 25(d) shows the synthesized stream CTS created by synthesizing the PID packets of the respective streams by the TS synthesizing unit 214, and transmitted to the controller 104A. The order of the respective PID packets of this synthesized stream CTS is different from the order of the PID packets of the received synthesized stream CTS, indicating that packet order switching has occurred. However, no problem arises in the controller 104A where packet order switching is allowed.

On the other hand, when recognizing that packet order switching is not allowed based on LCCs as discussed above, the microprocessor 201 controls buffering and synthesis of the respective PID packets such that the PID packets of the respective decrypted streams are synthesized in the order of the respective packets PID at the time of reception of the synthesized stream CTS.

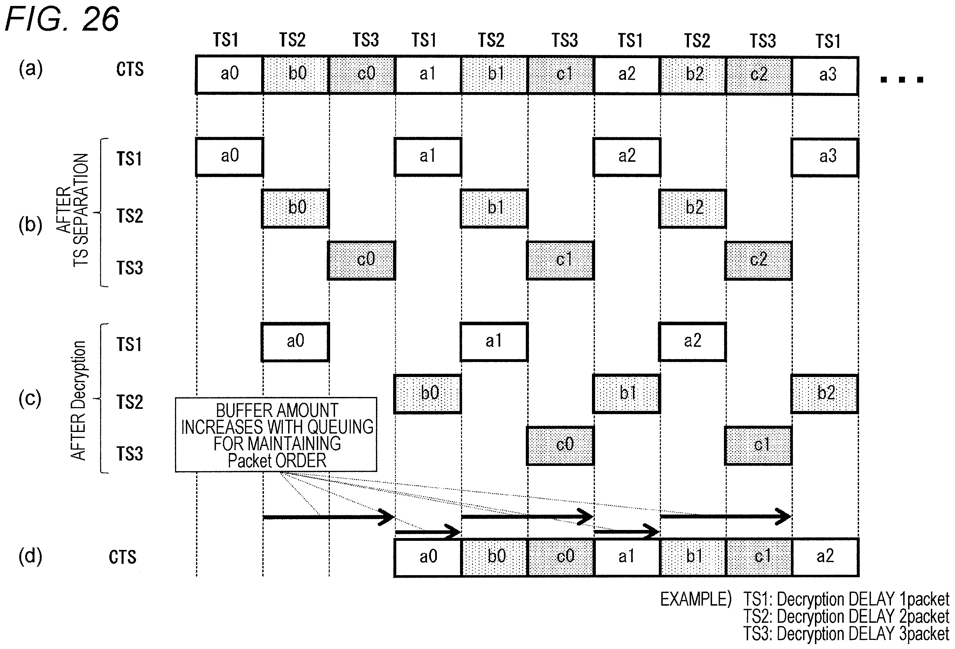

Figs. 26(a) to 26(d) are timing charts when the synthesized stream CTS received by the TS separating unit 211 is transmitted from the controller 104B not having the function for handling packet order switching based on count information.

Fig. 26(a) shows the synthesized stream CTS received by the TS separating unit 211. In this figure, a0, a1, a2, and others represent PID packets of the transport stream TS1. Moreover, b0, b1, b2, and others represent PID packets of the transport stream TS2. Furthermore, c0, c1, c2, and others represent PID packets of the transport stream TS3.

Fig. 26(b) shows PID packets of the streams TS1, TS2, and TS3 separated by the TS separating unit 211. Fig. 25(c) shows the PID packets of the streams TS1, TS2, and TS3 decrypted by the CA decryption units 212-1, 212-2, and 212-3. Figs. 26(a) through 26(c) are identical to Figs. 25(a) through 25(c).

Fig. 26(d) shows the synthesized stream CTS created by synthesizing the PID packets of the respective streams by the TS synthesizing unit 214, and transmitted to the controller 104B. The order of the respective PID packets of this synthesized stream CTS is identical to the order of the PID packets of the received synthesized stream CTS. In this case, the buffer capacity required for queuing increases so as to maintain the order of the PID packets, wherefore delay time at the CAM module 200 becomes longer.

The operation of the CAM module 200 illustrated in Fig. 24 is now described. The TS separating unit 211 receives the synthesized stream CTS transmitted from the common interface controller 104 (104A, 104B) of the host device 100 via a common interface. The TS separating unit 211 subsequently distributes the respective PID packets of the synthesized stream CTS to the respective streams TS1 through TSN based on LTSID inserted and added to the synchronous byte area within the header of each of the PID packets of the synthesized stream CTS (see Figs. 5(a) and 5(b)).

The TS separating unit 211 extracts LCC inserted and added to the synchronous byte area within the header of each of the PID packets of the synthesized stream CTS, and transmits the LCC to the microprocessor 201. The microprocessor 201 recognizes whether or not packet order switching is allowed based on the extracted LCCs, and controls buffering and synthesis of the respective PID packets based on the recognition result.

The PID packets of the respective streams separated by the TS separating unit 211 are supplied to the CA decryption units 212-1 through 212-N. The CA decryption units 212-1 through 212-N decrypt the PID packets of the respective streams to which the PID packets are distributed. The decrypted PID packets of the respective streams are supplied to the buffer units 213-1 through 213-N to be temporarily accumulated therein.

The TS synthesizing unit 214 synthesizes the PID packets of the respective streams accumulated in the buffer units 213-1 through 213-N to create the synthesized stream CTS, and transmits the synthesized stream CTS to the controller 104 (104A, 104B) of the host device 100. In this case, the decrypted PID packets of the respective streams are synthesized in the order of decrypting (see Fig. 25(d)) when the controller 104 is the controller 104A which allows packet order switching (see Fig. 2). On the other hand, the decrypted PID packets of the respective streams are synthesized in the order of the respective PID packets of the received synthesized stream CTS (see Fig. 26(d)) when the controller 104 is the controller 104B which does not allows packet order switching (see Fig. 19).

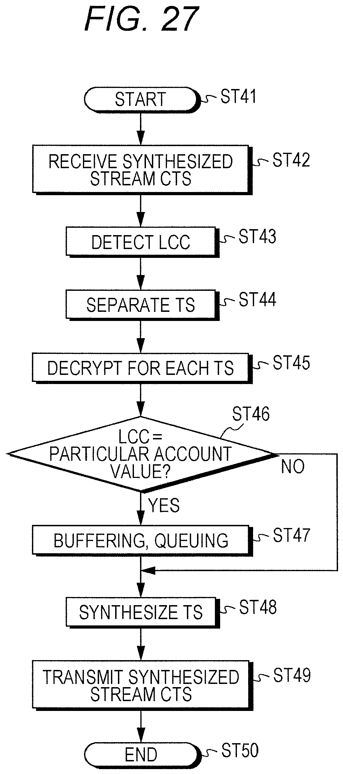

A flowchart in Fig. 27 shows the outline of an example of processing procedures executed by the CAM module 200. The CAM module 200 initially starts processing in step ST41, and subsequently shifts to a process in step ST42. In this step ST42, the CAM module 200 receives the synthesized stream CTS.

Then, the CAM module 200 detects LCCs added to the respective PID packets of the received synthesized stream CTS in step ST43. The CAM module 200 also distributes the respective PID packets of the received synthesized stream CTS to respective streams based on LTSIDs added to the PID packets in step ST44. The CAM module 200 subsequently decrypts the PID packets of the respective streams in step ST45.

Thereafter, the CAM module 200 determines whether or not the LCCs detected in step ST43 are particular count values in step ST46. When the LCCs are particular count values, i.e., when packet order switching is not allowed, the CAM module 200 executes buffering and queuing of the PID packets of the respective streams in step ST47, and then synthesizes the decrypted PID packets of the respective streams such that the order of the PID packets becomes identical to the order of the respective PID packets of the received synthesized stream CTS, so as to create the synthesized stream CTS in step ST48.

Subsequently, the CAM module 200 transmits the synthesized stream CTS obtained in step ST48 to the controller 104 of the host device 100 in step ST49. Thereafter, the CAM module 200 ends processing in step ST50.

On the other hand, when the LCCs are not particular count values in step ST46, i.e., when packet order switching is allowed, the CAM module 200 synthesizes the decrypted PID packets of the respective stream in the order of decrypting to create the synthesized stream CTS in step ST48. Then, the CAM module 200 transmits the synthesized stream CTS to the controller 104 of the host device 100 in step ST49. Thereafter, the CAM module 200 ends processing in step ST50.

As described above, the CAM module 200 illustrated in Fig. 24 controls buffering and synthesis of the respective PID packets at the descrambler 202 based on LCC added to the count information adding area provided in each of the PID packets of the received synthesized stream. Accordingly, the synthesized stream returns to the control 104 in the state corresponding to the controller 104 of the host device 100.

In the foregoing description of the CAM module 200, the operation for decrypting by the CA decryption units 212-1 through 212-N is not particularly touched upon. However, even when the decrypted PID packets of the respective streams are synthesized in the same order as the packet order of the received synthesized stream CTS based on recognition that packet order switching is not allowed, reduction of the delay amount is achievable by increasing the operation speed of the decrypting process.

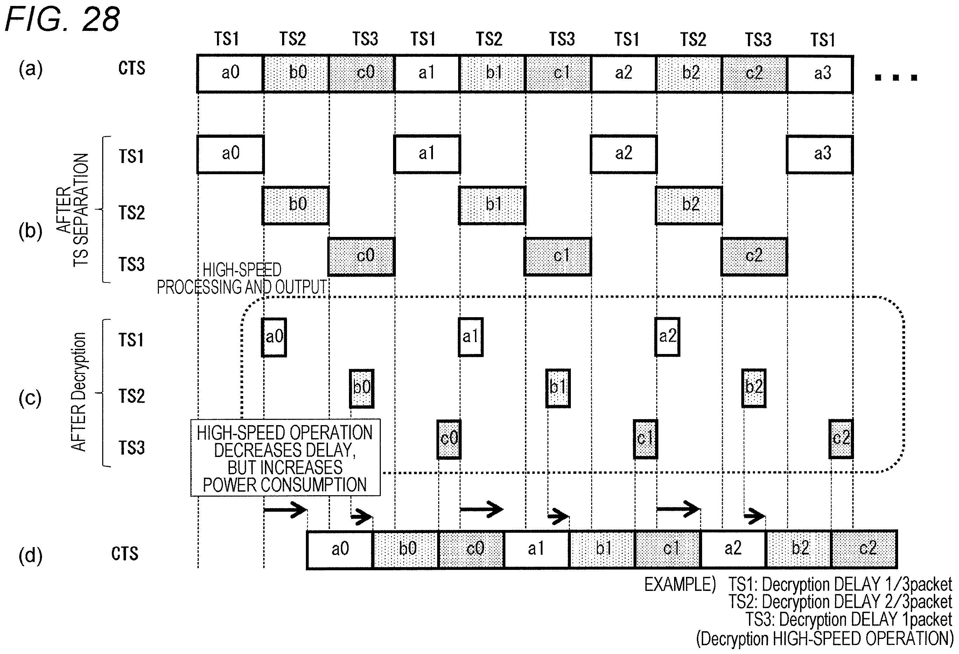

Figs. 28(a) to 28(d) are timing charts for describing this method. Fig. 28(a) shows the synthesized stream CTS received by the TS separating unit 211. Fig. 28(b) shows PID packets of the streams TS1, TS2, and TS3 separated by the TS separating unit 211. Figs. 28(a) and 28(b) are identical to Figs. 26(a) and 26(b).

Fig. 28(c) shows PID packets of the streams TS1, TS2, and TS3 decrypted by the CA decryption units 212-1, 212-2, and 212-3. By increasing the operation speed of the decrypting process, delays of the streams TS1, TS2, and TS3 produced by the decrypting process become 1/3 packet, 2/3 packet, and 1 packet, respectively. On the other hand, when the operation speed of the decrypting process is not raised, the delays of the streams TS1, TS2, and TS3 by the decrypting process become 1 packet, 2 packets, and 3 packets, respectively, as illustrated in Fig. 26(c).

Fig. 28(d) shows the synthesized stream CTS created by synthesizing the PID packets of the respective streams at the TS synthesizing unit 214, and transmitted to the controller 104B. The order of the respective PID packets of the synthesized stream CTS is identical to the order of the PID packets of the received synthesized stream CTS. In this case, the operation speed of the decrypting process is raised, wherefore the delay amount becomes smaller in comparison with the delay amount shown in Fig. 26(d).

### <2. Modified Example>

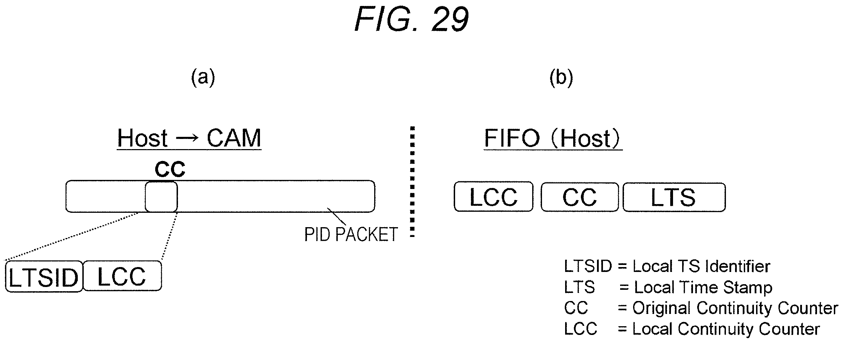

According to the foregoing example, LTSID and LCC are inserted into a synchronous byte (Sync byte) area within a TS header of a PID packet (see Fig. 5(a)). However, the present technology is not limited to this example. For example, there is a method which inserts LTSID and LCC into a cyclic counter (continuity_counter) area within a TS header of a PID packet as illustrated in Fig. 29(a). In this case, processing information supplied to the FIFO unit 147 or 147B and retained for a certain period therein becomes LTS and CC to which LCC is added as illustrated in Fig. 29(b), or LTS and CC to which LCC is not added. The CC herein is an original value in the cyclic count area.

For the controller 104A which allows packet order switching at the CAM module 200, addition of LCC to LTS and CC in this manner is needed. However, for the controller 104B which does not allow packet order switching at the CAM module 200, addition of LCC to LTS and CC in this manner is not needed.

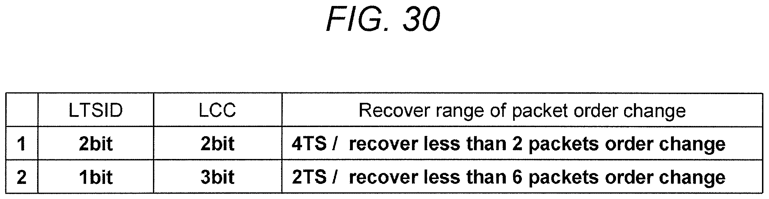

Fig. 30 illustrates an example of bit allocation of LTSID and LCC. When 2 bits are allocated to both LTSID and LCC, for example, identification of 4 transport streams is allowed. In this case, order switching of 2 packets or fewer can be handled. When 1 bit and 3 bits are allocated to LTSID and LCC, respectively, for example, identification of 2 transport streams is allowed. In this case, order switching of 6 packets or fewer can be handled.

According to the foregoing description, the host device 100 includes 3 tuners 102-1, 102-2, and 102-3 to handle the three transport streams TS1, TS2, and TS3. The present technology is applicable to situations handling two, four or more transport streams.

According to the foregoing description, the host device 100 transmits and receives synthesized streams to and from the CAM module 200 connected via a DVB-CI common interface, or a CI+ common interface. However, needless to say, the present technology is similarly applicable to wired or wireless transmission and reception of these synthesized streams between a host device and other external devices.

### REFERENCE SIGNS LIST

- 10: Reception system
- 100: Host device
- 101: Microprocessor
- 102-1 to 102-3: Tuner
- 103-1 to 103-3: Demodulator
- 104, 104A, 104B: Common interface controller
- 105-1 to 105-3: Demultiplexer
- 106-1 to 106-3: MPEG decoder
- 141-1 to 141-3: LTS adding unit
- 142-1 to 142-3: PID filter unit
- 143: Multiplexing (MUX) unit
- 144, 144B: LCC adding unit
- 145: Demultiplexing (DEMUX) unit
- 146: LCC extracting unit
- 147, 147B: FIFO unit
- 151-1 to 151-3 LTS: separating unit
- 152: TS multiplexing unit
- 161: TS separating and Sync replacing unit
- 162-1 to 162-3: Output timing adjusting unit
- 171a to 171f: Flip-flop
- 172: Selection signal generating unit
- 173: Switch unit
- 200: CAM module
- 201: Microprocessor
- 202: Descrambler
- 211: TS separating unit
- 212-1 to 212-N CA: decryption unit
- 213-3 to 213-N: Buffer unit
- 214: TS synthesizing unit

## Claims

1. An electronic device representing a host device (100) of a digital broadcasting reception system, said electronic device comprising:
a synthesized stream creating unit (143) configured to synthesize transport stream packets of plural received transport streams to create a synthesized stream;
a stream transmitting unit (104) configured to transmit the created synthesized stream to a Conditional Access Module, CAM, module (200) via a common interface;
a processing information retaining unit (171a-171f) configured to retain processing information for a certain period being at least time corresponding to a maximum delay time from transmission of the created synthesized stream to reception of a descrambled synthesized stream from the CAM module, the processing information being output at transmission timing of the respective transport stream packets of the synthesized stream, and used for processing the respective transport stream packets;
a count information adding unit (144) configured to provide count information by bringing a count information adding area provided in each of the transport stream packets into a state to which a count value is added as local continuity counter for each of the transport stream packets of the synthesized stream transmitted to the CAM module via the common interface;
a stream receiving unit (104) configured to receive a descrambled synthesized stream from the CAM module via the common interface obtained by the CAM module by descrambling the transmitted synthesized stream; and
a processing unit (145) configured to process the respective transport stream packets of the received descrambled synthesized stream based on the processing information corresponding to the respective transport stream packets and sequentially output from the processing information retaining unit,
wherein the count information provides an indication for the CAM module as to whether or not the electronic device has the function to perform packet order switching and packet order switching is allowed or not at the CAM module, wherein a particular count value indicates that the electronic device does not have the function to perform packet order switching and packet order switching is not allowed at the CAM module and other count values indicate that the electronic device has the function to perform packet order switching and packet order switching is allowed at the CAM module.

2. The electronic device according to claim 1, wherein the count information adding area is constituted by a partial area of a synchronous byte area within a header of transport stream packets.

3. The electronic device according to claim 2, wherein the partial area is a predetermined-number bit area having 1 as a bit value of synchronous signal or a low-order 4-bit area or a low-order 3-bit area of the synchronous byte area.

4. The electronic device according to any one of claims 1, 2 or 3, wherein
the processing information for processing the respective transport stream packets contains time information indicating time positions of the respective transport stream packets in original transport streams, and
the processing unit (145) is configured to locate, in respective streams to which the respective transport stream packets of the received synthesized stream are distributed, the respective transport stream packets at time positions in accordance with the time information corresponding to the respective transport stream packets so as to reconstitute the plural transport streams.

5. The electronic device according to claim 4 further comprising:
a stream identification information adding unit (143) configured to add stream identification information for identifying original transport streams to the respective transport stream packets of the synthesized stream transmitted to the CAM module via the common interface; and
a stream identification information obtaining unit (145) configured to obtain the stream identification information from the respective transport stream packets of the received synthesized stream,
wherein the processing unit (145) distributes the respective transport stream packets of the received synthesized stream to the respective streams in accordance with the stream identification information obtained from the respective transport stream packets.

6. The electronic device according to any one of claims 1-5, wherein
the stream transmitting unit (104) is configured to transmit the synthesized stream to the CAM module via a DVB-CI common interface, or a CI+ common interface,
the stream receiving unit (104) is configured to receive the synthesized stream from the CAM module via a DVB-CI common interface, or a CI+ common interface, and
the CAM module (200) is a conditional access module configured to execute descrambling.

7. An electronic device representing a Conditional Access Module, CAM, module (200) of a digital broadcasting reception system, said electronic device comprising:
a stream receiving unit (202) configured to receive a synthesized stream created by synthesizing transport stream packets of plural transport streams from a host device via a common interface;
a processing unit (211) configured to separate the respective transport stream packets of the received synthesized stream, decrypt the respective separated transport stream packets, and synthesize the respective decrypted transport stream packets to create a descrambled synthesized stream;
a stream transmitting unit (202) configured to transmit the created descrambled synthesized stream to the host device via the common interface; and
a control unit (201) configured to control the processing unit based on count information added to a count information adding area provided in transport stream packets of the received synthesized stream by bringing the count information adding area provided in transport stream packets into a state to which a particular count value is added as local continuity counter for transport stream packets of the synthesized stream,
wherein the count information provides an indication for the CAM module as to whether or not the electronic device has the function to perform packet order switching and packet order switching is allowed or not at the CAM module, wherein a particular count value indicates that the electronic device does not have the function to perform packet order switching and packet order switching is not allowed at the CAM module and other count values indicate that the electronic device has the function to perform packet order switching and packet order switching is allowed at the CAM module.

8. The electronic device according to claim 7, wherein the control unit (201) is configured to control such that the order of the respective transport stream packets of the created synthesized stream becomes the same order as the order of the respective transport stream packets of the received synthesized stream when the count information has a particular count value.

9. The electronic device according to claim 8, wherein the control unit (201) is configured to raise the speed of decrypting operation when the count information has a particular count value.

10. The electronic device according to any one of claims 7-9, wherein the count information adding area is constituted by a partial area of a synchronous byte area within a header of transport stream packets.

11. A synthesized stream transmitting method performed by a host device (100) of a digital broadcasting reception system, said method comprising:
synthesizing transport stream packets of plural received transport streams to create a synthesized stream;
transmitting the created synthesized stream to a Conditional Access Module, CAM, module via a common interface;
retaining processing information for a certain period being at least time corresponding to a maximum delay time from transmission of the created synthesized stream to reception of a descrambled synthesized stream from the CAM module, the processing information being output at transmission timing of the respective transport stream packets of the synthesized stream, and used for processing the respective transport stream packets;
providing count information by bringing a count information adding area provided in transport stream packets into a state to which a particular count value is added as local continuity counter for transport stream packets of the synthesized stream transmitted to the CAM module via the common interface;
receiving a descrambled synthesized stream from the CAM module via the common interface obtained by the CAM module by descrambling the transmitted synthesized stream; and
processing the respective transport stream packets of the received descrambled synthesized stream based on the processing information corresponding to the respective transport stream packets sequentially output,
wherein the count information provides an indication for the CAM module as to whether or not the electronic device has the function to perform packet order switching and packet order switching is allowed or not at the CAM module, wherein a particular count value indicates that the electronic device does not have the function to perform packet order switching and packet order switching is not allowed at the CAM module and other count values indicate that the electronic device has the function to perform packet order switching and packet order switching is allowed at the CAM module.

12. A computer program comprising program code which, when executed by a computer, cause the computer to carry out the steps of:
synthesizing transport stream packets of plural received transport streams to create a synthesized stream;
transmitting the created synthesized stream to a Conditional Access Module, CAM, module via a common interface;
retaining processing information for a certain period being at least time corresponding to a maximum delay time from transmission of the created synthesized stream to reception of a descrambled synthesized stream from the CAM module, the processing information being output at transmission timing of the respective transport stream packets of the synthesized stream, and used for processing the respective transport stream packets;
providing count information by bringing a count information adding area provided in transport stream packets into a state to which a particular count value is added as local continuity counter for transport stream packets of the synthesized stream transmitted to the CAM module via the common interface;
receiving a descrambled synthesized stream from the CAM module via the common interface obtained by the CAM module by descrambling the transmitted synthesized stream; and
processing the respective transport stream packets of the received descrambled synthesized stream based on the processing information corresponding to the respective transport stream packets sequentially output,
wherein the count information provides an indication for the CAM module as to whether or not the electronic device has the function to perform packet order switching and packet order switching is allowed or not at the CAM module, wherein a particular count value indicates that the electronic device does not have the function to perform packet order switching and packet order switching is not allowed at the CAM module and other count values indicate that the electronic device has the function to perform packet order switching and packet order switching is allowed at the CAM module.

13. Television receiver including an electronic device (100) according to any of claims 1-6.

14. Set top box including an electronic device (100) according to any of claims 1-6 .

15. A method performed by a Conditional Access Module, CAM, module (200) of a digital broadcasting reception system, said method comprising:
receiving a synthesized stream created by synthesizing transport stream packets of plural transport streams from an host device via a common interface;
separating the respective transport stream packets of the received synthesized stream;
decrypting the respective separated transport stream packets;
synthesizing the respective decrypted transport stream packets to create a descrambled synthesized stream;
transmitting the created descrambled synthesized stream to the host device via the common interface; and
controlling the separating, decrypting and synthesizing based on count information added to a count information adding area provided in transport stream packets of the received synthesized stream by bringing the count information adding area provided in transport stream packets into a state to which a particular count value is added as local continuity counter for transport stream packets of the synthesized stream,
wherein the count information provides an indication for the CAM module as to whether or not the electronic device has the function to perform packet order switching and packet order switching is allowed or not at the CAM module, wherein a particular count value indicates that the electronic device does not have the function to perform packet order switching and packet order switching is not allowed at the CAM module and other count values indicate that the electronic device has the function to perform packet order switching and packet order switching is allowed at the CAM module.

## Patentansprüche

1. Elektronische Vorrichtung, welche eine Host-Vorrichtung (100) eines digitalen Rundfunkempfangssystems darstellt, wobei die elektronische Vorrichtung umfasst:
eine Erzeugungseinheit (143) für synthetisierte Datenströme, die ausgelegt, Transportdatenstrompakete von mehreren empfangenen Transportdatenströmen zusammenzusetzen, um einen synthetisierten Datenstrom zu erzeugen;
eine Datenstromübertragungseinheit (104), die ausgelegt ist, den erzeugten synthetisierten Datenstrom an ein Zugangsberechtigungsmodul, CAM-Modul, (200) über eine gemeinsame Schnittstelle zu übertragen;
eine Informationsverarbeitungsrückhalteeinheit (171a-171f), die ausgebildet ist, Verarbeitungsinformation für eine bestimmte Zeitspanne zurückzuhalten, welche zumindest die Zeit ist, die einer maximalen Verzögerungszeit von der Übertragung des erzeugten synthetisierten Datenstroms bis zum Empfang eines entschlüsselten synthetisierten Datenstroms von dem CAM-Modul entspricht, wobei die Verarbeitungsinformation zum Übertragungszeitpunkt des jeweiligen Transportdatenstrompakets des synthetisierten Datenstroms ausgegeben und zum Verarbeiten des jeweiligen Transportdatenstrompakets verwendet wird;
eine Zählinformationsadditionseinheit (144), die ausgelegt ist, Zählinformation durch das Überführen eines Zählinformationsadditionsbereichs zur Verfügung zu stellen, welcher in jedem der Transportdatenstrompakete vorgesehen ist, in einen Zustand, zu welchem ein Zählwert als lokaler Kontinuitätszähler für jedes der Transportdatenstrompakete des synthetisierten Datenstroms, der an das CAM-Modul über die gemeinsame Schnittstelle übertragen wird, addiert wird;
eine Datenstromempfangseinheit (104), die ausgelegt ist, einen entschlüsselten synthetisierten Datenstrom von dem CAM-Modul über die gemeinsame Schnittstelle zu empfangen, welcher durch das CAM-Modul durch Entschlüsseln des übertragenen synthetisierten Datenstroms bezogen wird; und
eine Verarbeitungseinheit (145), die ausgelegt ist, die jeweiligen Transportdatenstrompakete des empfangenen entschlüsselten synthetisierten Datenstroms auf Basis der Verarbeitungsinformation zu verarbeiten, die den jeweiligen Transportdatenstrompaketen entspricht, und um diese sequentiell von der Informationsverarbeitungsrückhalteeinheit auszugeben,
wobei die Zählinformation eine Anzeige für das CAM-Modul zur Verfügung stellt, ob oder ob nicht die elektronische Vorrichtung die Funktion hat, Paketvermittlung durchzuführen und ob Paketvermittlung in dem CAM-Modul erlaubt ist oder nicht, wobei ein bestimmter Zählwert anzeigt, dass die elektronische Vorrichtung nicht die Funktion hat, Paketvermittlung durchzuführen und dass Paketvermittlung nicht in dem CAM-Modul erlaubt ist, und wobei andere Zählwerte anzeigen, dass die elektronische Vorrichtung die Funktion hat, Paketvermittlung durchzuführen und dass Paketvermittlung in dem CAM-Modul erlaubt ist.

2. Elektronische Vorrichtung nach Anspruch 1, wobei der Zählinformationsadditionsbereich durch einen Teilbereich eines Synchronbytebereiches innerhalb einer Kopfzeile von Transportdatenstrompaketen ausgebildet ist.

3. Elektronische Vorrichtung nach Anspruch 2, wobei der Teilbereich ein Bereich mit einer vorbestimmten Bitanzahl ist, welcher 1 als Bitwert des Synchronsignals oder einen 4-Bit-Bereich niedriger Ordnung oder einen 3-Bit-Bereich niedriger Ordnung des Synchronbytebereiches hat.

4. Elektronische Vorrichtung nach einem der Ansprüche 1, 2 oder 3, wobei
die Verarbeitungsinformation zum Verarbeiten des jeweiligen Transportdatenstrompakets Zeitinformation enthält, welche Zeitpositionen des jeweiligen Transportdatenstrompakets in ursprünglichen Datentransportströmen anzeigt, und
wobei die Verarbeitungseinheit (145) ausgelegt ist, in jeweiligen Datenströmen, an welche die jeweiligen Transportdatenstrompakete des empfangenen synthetisierten Datenstroms verteilt werden, die jeweiligen Transportdatenstrompakete in Zeitpositionen in Übereinstimmung mit der Zeitinformation zu lokalisieren, welche mit dem jeweiligen Transportdatenstrompaket korrespondiert, um die mehreren Transportdatenströme wiederherzustellen.

5. Elektronische Vorrichtung nach Anspruch 4, weiterhin umfassend:
eine Datenstromidentifikationsinformationsadditionseinheit (143), die ausgelegt ist, Datenstromidentifikationsinformation zum Identifizieren des ursprünglichen Transportdatenstroms zu dem jeweiligen Transportdatenstrompaket des synthetisierten Datenstroms hinzuzufügen, welcher an das CAM-Modul über die gemeinsame Schnittstelle übertragen wird; und
eine Datenstromidentifikationsinformationsbezugseinheit (145), die ausgelegt ist, die Datenstromidentifikationsinformation von dem jeweiligen Transportdatenstrompaket des empfangenen synthetisierten Datenstroms zu beziehen,
wobei die Verarbeitungseinheit (145) die jeweiligen Transportdatenstrompakete des empfangenen synthetisierten Datenstroms an die jeweiligen Datenströme in Übereinstimmung mit der Datenstromidentifikationsinformation verteilt, welche von dem jeweiligen Transportdatenstrompaket bezogen wird.

6. Elektronische Vorrichtung nach einem der Ansprüche 1-5, wobei
die Datenstromübermittlungseinheit (104) ausgelegt ist, den synthetisierten Datenstrom an das CAM-Modul über eine gemeinsame DVB-CI-Schnittstelle oder eine gemeinsame CI+-Schnittstelle zu übertragen,
wobei die Stromempfangseinheit (104) ausgelegt ist, den synthetisierten Datenstrom von dem CAM-Modul über eine gemeinsame DVB-CI-Schnittstelle oder eine gemeinsame CI+-Schnittstelle zu empfangen, und
wobei das CAM-Modul (200) ein Zugangsberechtigungsmodul ist, das ausgelegt ist, Entschlüsselung durchzuführen.

7. Elektronische Vorrichtung, die ein Zugangsberechtigungsmodul, CAM-Modul, (200) eines digitalen Rundfunkempfangssystems darstellt, wobei die elektronische Vorrichtung umfasst:
eine Datenstromempfangseinheit (202), die ausgelegt ist, einen synthetisierten Datenstrom zu empfangen, welcher durch Synthetisieren von Transportdatenstrompaketen aus mehreren Transportdatenströmen von einer Host-Vorrichtung über eine gemeinsame Schnittstelle erzeugt wird;
eine Verarbeitungseinheit (211), die ausgelegt ist, die jeweiligen Transportdatenstrompakete des empfangenen synthetisierten Datenstroms zu trennen, die jeweiligen getrennten Transportdatenstrompakete zu entschlüsseln und die jeweiligen entschlüsselten Transportdatenstrompakete zu synthetisieren, um einen entschlüsselten synthetisierten Datenstrom zu erzeugen;
eine Datenstromübermittlungseinheit (202), die ausgelegt ist, den erzeugten entschlüsselten synthetisierten Datenstrom an die Host-Vorrichtung über die gemeinsame Schnittstelle zu übermitteln; und
eine Steuerungseinheit (201), die ausgelegt ist, die Verarbeitungseinheit auf Basis einer Zählinformation zu steuern, welche zu einem Zählinformationsadditionsbereich hinzugefügt wird, welche in Transportdatenstrompaketen des empfangenen synthetisierten Datenstroms enthalten ist, durch Überbringen des Zählinformationsadditionsbereichs, welcher in Transportdatenstrompaketen enthalten ist, in einen Zustand, in welchem ein spezifischer Zählwert als lokaler Stetigkeitszähler für Transportdatenstrompakete des synthetisierten Datenstroms dazuaddiert wird,
wobei die Zählinformation eine Anzeige für das CAM-Modul zur Verfügung stellt, ob oder ob nicht die elektronische Vorrichtung die Funktion hat, Paketvermittlung durchzuführen und ob Paketvermittlung in dem CAM-Modul erlaubt ist oder nicht, wobei ein bestimmter Zählwert anzeigt, dass die elektronische Vorrichtung nicht die Funktion hat, Paketvermittlung durchzuführen und dass Paketvermittlung nicht in dem CAM-Modul erlaubt ist, und wobei andere Zählwerte anzeigen, dass die elektronische Vorrichtung die Funktion hat, Paketvermittlung durchzuführen und dass Paketvermittlung in dem CAM-Modul erlaubt ist.

8. Elektronische Vorrichtung nach Anspruch 7, wobei die Steuerungseinheit (201) ausgelegt ist, so zu steuern, dass die Reihenfolge der jeweiligen Transportdatenstrompakete des erzeugten synthetisierten Datenstroms die gleiche Reihenfolge wie die Reihenfolge der jeweiligen Transportdatenstrompakete des empfangenen synthetisierten Datenstroms erhält, wenn die Zählinformation einen bestimmten Zählwert aufweist.

9. Elektronische Vorrichtung nach Anspruch 8, wobei die Steuerungseinheit (201) ausgelegt ist, die Geschwindigkeit der Entschlüsselungsoperation anzuheben, wenn die Zählinformation einen bestimmten Zählwert aufweist.

10. Elektronische Vorrichtung nach einem der Ansprüche 7-9, wobei der Zählinformationsadditionsbereich durch einen Teilbereich eines Synchronbytebereiches in einer Kopfzeile von Transportdatenstrompaketen ausgebildet ist.

11. Übertragungsverfahren für zusammengesetzte Ströme, welches durch eine Host-Vorrichtung (100) eines digitalen Rundfunkempfangssystems ausgeführt wird, wobei das Verfahren umfasst:
Synthetisieren von Transportdatenstrompaketen von mehreren empfangenen Transportdatenströmen, um einen synthetisierten Datenstrom zu erzeugen;
Übertragen des erzeugten synthetisierten Datenstroms an ein Zugangsberechtigungsmodul, CAM-Modul, (200) über eine gemeinsame Schnittstelle;
Zurückhalten von Verarbeitungsinformation für eine bestimmte Zeitspanne, welche zumindest die Zeit ist, die einer maximalen Verzögerungszeit von der Übertragung des erzeugten synthetisierten Datenstroms bis zum Empfang eines entschlüsselten synthetisierten Datenstroms von dem CAM-Modul entspricht, wobei die Verarbeitungsinformation zum Übertragungszeitpunkt des jeweiligen Transportdatenstrompakets des synthetisierten Datenstroms ausgegeben und zum Verarbeiten des jeweiligen Transportdatenstrompakets verwendet wird;
Zurverfügungstellen von Zählinformation durch das Überführen eines Zählinformationsadditionsbereichs, welcher in jedem der Transportdatenstrompakete vorgesehen ist, in einen Zustand, zu welchem ein Zählwert als lokaler Kontinuitätszähler für jedes der Transportdatenstrompakete des synthetisierten Datenstroms, der an das CAM-Modul über die gemeinsame Schnittstelle übertragen wird, addiert wird;
Empfangen eines entschlüsselten synthetisierten Datenstroms von dem CAM-Modul über die gemeinsame Schnittstelle, welcher durch das CAM-Modul durch Entschlüsseln des übertragenen synthetisierten Datenstroms bezogen wird; und
Verarbeiten der jeweiligen Transportdatenstrompakete des empfangenen entschlüsselten synthetisierten Datenstroms auf Basis der Verarbeitungsinformation, die den jeweiligen sequenziell ausgegebenen Transportdatenstrompaketen entspricht,
wobei die Zählinformation eine Anzeige für das CAM-Modul zur Verfügung stellt, ob oder ob nicht die elektronische Vorrichtung die Funktion hat, Paketvermittlung durchzuführen und ob Paketvermittlung in dem CAM-Modul erlaubt ist oder nicht, wobei ein bestimmter Zählwert anzeigt, dass die elektronische Vorrichtung nicht die Funktion hat, Paketvermittlung durchzuführen und dass Paketvermittlung nicht in dem CAM-Modul erlaubt ist, und wobei andere Zählwerte anzeigen, dass die elektronische Vorrichtung die Funktion hat, Paketvermittlung durchzuführen und dass Paketvermittlung in dem CAM-Modul erlaubt ist.

12. Computerprogramm umfassend Programmcode, welcher, wenn er durch einen Computer ausgeführt wird, den Computer veranlasst, die folgenden Schritte auszuführen:
Synthetisieren von Transportdatenstrompaketen von mehreren empfangenen Transportdatenströmen, um einen synthetisierten Datenstrom zu erzeugen;
Übertragen des erzeugten synthetisierten Datenstroms an ein Zugangsberechtigungsmodul, CAM-Modul, (200) über eine gemeinsame Schnittstelle;
Zurückhalten von Verarbeitungsinformation für eine bestimmte Zeitspanne, welche zumindest die Zeit ist, die einer maximalen Verzögerungszeit von der Übertragung des erzeugten synthetisierten Datenstroms bis zum Empfang eines entschlüsselten synthetisierten Datenstroms von dem CAM-Modul entspricht, wobei die Verarbeitungsinformation zum Übertragungszeitpunkt des jeweiligen Transportdatenstrompakets des synthetisierten Datenstroms ausgegeben und zum Verarbeiten des jeweiligen Transportdatenstrompakets verwendet wird;
Zurverfügungstellen von Zählinformation durch das Überführen eines Zählinformationsadditionsbereichs, welcher in jedem der Transportdatenstrompakete vorgesehen ist, in einen Zustand, zu welchem ein Zählwert als lokaler Kontinuitätszähler für jedes der Transportdatenstrompakete des synthetisierten Datenstroms, der an das CAM-Modul über die gemeinsame Schnittstelle übertragen wird, addiert wird;
Empfangen eines entschlüsselten synthetisierten Datenstroms von dem CAM-Modul über die gemeinsame Schnittstelle, welcher durch das CAM-Modul durch Entschlüsseln des übertragenen synthetisierten Datenstroms bezogen wird; und
Verarbeiten der jeweiligen Transportdatenstrompakete des empfangenen entschlüsselten synthetisierten Datenstroms auf Basis der Verarbeitungsinformation, die den jeweiligen sequenziell ausgegebenen Transportdatenstrompaketen entspricht,
wobei die Zählinformation eine Anzeige für das CAM-Modul zur Verfügung stellt, ob oder ob nicht die elektronische Vorrichtung die Funktion hat, Paketvermittlung durchzuführen und ob Paketvermittlung in dem CAM-Modul erlaubt ist oder nicht, wobei ein bestimmter Zählwert anzeigt, dass die elektronische Vorrichtung nicht die Funktion hat, Paketvermittlung durchzuführen und dass Paketvermittlung nicht in dem CAM-Modul erlaubt ist, und wobei andere Zählwerte anzeigen, dass die elektronische Vorrichtung die Funktion hat, Paketvermittlung durchzuführen und dass Paketvermittlung in dem CAM-Modul erlaubt ist.

13. Fernsehempfänger umfassend eine elektronische Vorrichtung (100) nach einem der Ansprüche 1-6.

14. Digitalempfänger umfassend eine elektronische Vorrichtung (100) nach einem der Ansprüche 1-6.

15. Verfahren durchgeführt von einem Zugangsberechtigungsmodul, CAM-Modul, (200) eines digitalen Rundfunkempfangssystems, wobei das Verfahren umfasst:
Empfangen eines synthetisierten Datenstroms, welcher durch Synthetisieren von Transportdatenstrompaketen aus mehreren Transportdatenströmen von einer Host-Vorrichtung über eine gemeinsame Schnittstelle erzeugt wird;
Trennen der jeweiligen Transportdatenstrompakete des empfangenen synthetisierten Datenstroms,
Entschlüsseln der jeweiligen getrennten Transportdatenstrompakete,
Synthetisieren der jeweiligen entschlüsselten Transportdatenstrompakete, um einen entschlüsselten synthetisierten Datenstrom zu erzeugen;
Übermitteln des erzeugten entschlüsselten synthetisierten Datenstrom an die Host-Vorrichtung über die gemeinsame Schnittstelle; und
Steuern des Trennens, Entschlüsselns und Synthetisierens auf Basis einer Zählinformation, welche zu einem Zählinformationsadditionsbereich hinzugefügt wird, welche in Transportdatenstrompaketen des empfangenen synthetisierten Datenstroms enthalten ist, durch Überbringen des Zählinformationsadditionsbereichs, welcher in Transportdatenstrompaketen enthalten ist, in einen Zustand, in welchem ein spezifischer Zählwert als lokaler Stetigkeitszähler für Transportdatenstrompakete des synthetisierten Datenstroms dazuaddiert wird,
wobei die Zählinformation eine Anzeige für das CAM-Modul zur Verfügung stellt, ob oder ob nicht die elektronische Vorrichtung die Funktion hat, Paketvermittlung durchzuführen und ob Paketvermittlung in dem CAM-Modul erlaubt ist oder nicht, wobei ein bestimmter Zählwert anzeigt, dass die elektronische Vorrichtung nicht die Funktion hat, Paketvermittlung durchzuführen und dass Paketvermittlung nicht in dem CAM-Modul erlaubt ist, und wobei andere Zählwerte anzeigen, dass die elektronische Vorrichtung die Funktion hat, Paketvermittlung durchzuführen und dass Paketvermittlung in dem CAM-Modul erlaubt ist.

## Revendications

1. Dispositif électronique représentant un dispositif hôte (100) d'un système de réception de radiodiffusion numérique, ledit dispositif électronique comprenant :
une unité de création d'un train synthétisé (143) configurée pour synthétiser des paquets de trains de transport de plusieurs trains de transport reçus pour créer un train synthétisé ;
une unité de transmission de train (104) configurée pour transmettre le train synthétisé créé à un module d'accès conditionnel CAM (Conditional Access Module), par le biais d'une interface commune ;
une unité de conservation d'informations de traitement (171a-171f) configurée pour conserver des informations de traitement pendant une certaine période, au moins pendant un temps correspondant à un temps de retard maximal entre la transmission du train synthétisé créé et la réception d'un train synthétisé sans brouillage du module CAM, les informations de traitement étant émises au moment de l'émission des paquets de trains de transport respectifs du train synthétisé, et utilisées pour traiter les paquets de trains de transport respectifs ;
une unité d'addition d'informations de comptage (144) configurée pour fournir des informations de comptage en amenant une zone d'addition d'informations de comptage fournie dans chacun des paquets de trains de transport dans un état auquel une valeur de comptage est ajoutée comme compteur de continuité locale pour chacun des paquets de trains de transport du train synthétisé transmis au module CAM par le biais de l'interface commune ;
une unité de réception de train (104) configurée pour recevoir un train synthétisé sans brouillage provenant du module CAM par le biais de l'interface commune obtenue par le module CAM en éliminant le brouillage du train synthétisé transmis ; et
une unité de traitement (145) configurée pour traiter les paquets de trains de transport respectifs du train synthétisé sans brouillage reçu sur la base des informations de traitement correspondant aux paquets de trains de transport respectifs et sortis en séquence à partir de l'unité de conservation des informations de traitement,
dans lequel les informations de comptage fournissent une indication pour le module CAM pour savoir si le dispositif électronique a ou non la fonction d'effectuer un changement de l'ordre des paquets et si le changement de l'ordre des paquets est autorisé ou non dans le module CAM, dans lequel une valeur de comptage particulière indique que le dispositif électronique n'a pas la fonction de changement de l'ordre des paquets et le changement de l'ordre des paquets n'est pas autorisé dans le module CAM et d'autres valeurs de comptage indiquent que le dispositif électronique a la fonction de changement de l'ordre des paquets et le changement de l'ordre des paquets est autorisé dans le module CAM.

2. Dispositif électronique selon la revendication 1, dans lequel la zone d'ajout d'informations de comptage est constituée par une zone partielle d'une zone d'octets synchrones dans un en-tête de paquets du train de transport.

3. Dispositif électronique selon la revendication 2, dans lequel la zone partielle est une zone de bits de nombre prédéterminée ayant 1 comme valeur de bit de signal synchrone ou une zone de 4 bits de poids faible ou une zone de 3 bits de poids faible de la zone d'octets synchrone.

4. Dispositif électronique selon l'une quelconque des revendications 1, 2 et 3, dans lequel
les informations de traitement pour traiter les paquets respectifs du train de transport contiennent des informations temporelles indiquant les positions temporelles des paquets respectifs du train de transport dans les trains de transport d'origine, et
l'unité de traitement (145) est configurée pour localiser, dans des trains respectifs dans lesquels sont distribués les paquets de trains de transport respectifs du train synthétisé reçu, les paquets de trains de transport respectifs en des positions temporelles en fonction de l'intervalle de temps correspondant aux paquets de trains de transport respectifs de manière à reconstituer la pluralité des trains de transport.

5. Procédé électronique selon la revendication 4, comprenant en outre :
une unité d'ajout d'informations d'identification de train (143) configurée pour ajouter des informations d'identification de train pour identifier des trains de transport originaux aux paquets respectifs du train de transport du train synthétisé transmis au module CAM par le biais de l'interface commune ; et
une unité d'obtention d'informations sur l'identification des trains (145) configurée pour obtenir les informations d'identification de train à partir des paquets de trains de transport respectifs du train synthétisé reçu,
dans lequel l'unité de traitement (145) distribue les paquets de trains de transport respectifs du train synthétisé reçu aux trains respectifs conformément aux informations d'identification de train obtenues à partir des paquets de trains de transports respectifs.

6. Dispositif électronique selon l'une quelconque des revendications 1 a 5, dans lequel
l'unité de transmission de train (104) est configurée pour transmettre le train synthétisé au module CAM par une interface commune DVB-CI, ou une interface commune CI+,
l'unité de réception de train (104) est configurée pour recevoir le train synthétisé du module CAM par une interface commune DVB-CI, ou une interface commune CI+, et
le module CAM (200) est un module d'accès conditionnel configuré pour exécuter l'élimination du brouillage.

7. Dispositif électronique représentant un module d'accès conditionnel, CAM (200) d'un système de réception de radiodiffusion numérique, ledit dispositif électronique comprenant :
une unité de réception de train (202) configurée pour recevoir un train synthétisé créé en synthétisant des paquets de trains de transport provenant de plusieurs trains de transport à partir d'un dispositif hôte par le biais d'une interface commune ;
une unité de traitement (211) configurée pour séparer les paquets de trains de transport respectifs du train synthétisé reçu, décrypter les paquets de trains de transport séparés respectifs, et synthétiser les paquets de trains de transport décryptés respectifs pour créer un train synthétisé sans brouillage ;
une unité de transmission de train (202) configurée pour transmettre le train synthétisé sans brouillage créé au dispositif hôte par le biais de l'interface commune ; et
une unité de commande (201) configurée pour commander l'unité de traitement sur la base d'informations de comptage ajoutées à une zone d'addition d'informations de comptage fournie dans des paquets de trains de transport du train synthétisé reçu en amenant la zone d'addition d'informations de comptage fournie dans des paquets de trains de transport dans un état auquel une valeur de comptage particulière est ajoutée en tant que compteur de continuité local pour des paquets de trains de transport du train synthétisé,
dans lequel les informations de comptage fournissent une indication pour le module CAM pour savoir si le dispositif électronique a ou non la fonction d'effectuer un changement de l'ordre des paquets et si le changement de l'ordre des paquets est autorisé ou non dans le module CAM, dans lequel une valeur de comptage particulière indique que le dispositif électronique n'a pas la fonction de changement de l'ordre des paquets et le changement de l'ordre des paquets n'est pas autorisé dans le module CAM et d'autres valeurs de comptage indiquent que le dispositif électronique a la fonction de changement de l'ordre des paquets et le changement de l'ordre des paquets est autorisé dans le module CAM.

8. Dispositif électronique selon la revendication 7, dans lequel l'unité de commande (201) est configurée pour contrôler que l'ordre des paquets de trains de transport respectifs du train synthétisé créé devienne le même ordre que l'ordre des paquets de trains de transport respectifs du train synthétisé reçu lorsque les informations de comptage ont une valeur de comptage particulière.

9. Dispositif électronique selon la revendication 8, dans lequel l'unité de commande (201) est configurée pour augmenter la vitesse de l'opération de décryptage lorsque les informations de comptage ont une valeur de comptage particulière.

10. Dispositif électronique selon l'une quelconque des revendications 7 à 9, dans lequel la zone d'ajout d'informations de comptage est constituée par une zone partielle d'une zone d'octets synchrones dans un en-tête de paquets du train de transport.

11. Procédé de transmission de train synthétisé exécuté par un dispositif hôte (100) d'un système de réception de diffusion numérique, ledit procédé comprenant :
la synthèse de paquets de trains de transport à partir de plusieurs trains de transport reçus pour créer un train synthétisé ;
la transmission du train synthétisé créé à un module d'accès conditionnel CAM, par le biais d'une interface commune ;
la conservation d'informations de traitement pendant une certaine période, au moins pour un temps correspondant à un temps de retard maximal entre la transmission du train synthétisé créé et la réception d'un train synthétisé sans brouillage du module CAM, les informations de traitement étant émises au moment de l'émission des paquets de trains de transport respectifs du train synthétisé, et utilisées pour traiter les paquets de trains de transport respectifs ;
la fourniture d'informations de comptage en amenant une zone d'addition d'informations de comptage fournie dans les paquets de trains de transport dans un état dans lequel une valeur de comptage particulière est ajoutée comme compteur de continuité locale pour les paquets de trains de transport du train synthétisé transmis au module CAM par le biais de l'interface commune ;
la réception d'un train synthétisé sans brouillage provenant du module CAM par le biais de l'interface commune obtenu par le module CAM en éliminant le brouillage du train synthétisé transmis ; et
le traitement des paquets de trains de transport respectifs du train synthétisé sans brouillage reçu sur la base des informations de traitement correspondant aux paquets de trains de transport respectifs délivrés en séquence,
dans lequel les informations de comptage fournissent une indication pour le module CAM pour savoir si le dispositif électronique a ou non la fonction d'effectuer un changement de l'ordre des paquets et si le changement de l'ordre des paquets est autorisé ou non dans le module CAM, dans lequel une valeur de comptage particulière indique que le dispositif électronique n'a pas la fonction de changement de l'ordre des paquets et le changement de l'ordre des paquets n'est pas autorisé dans le module CAM et d'autres valeurs de comptage indiquent que le dispositif électronique a la fonction de changement de l'ordre des paquets et le changement de l'ordre des paquets est autorisé dans le module CAM.

12. Programme d'ordinateur comprenant un code de programme qui, lorsqu'il est exécuté par un ordinateur, fait que l'ordinateur exécute les étapes suivantes :
la synthèse de paquets de trains de transport à partir de plusieurs trains de transport reçus pour créer un train synthétisé ;
la transmission du train synthétisé créé à un module d'accès conditionnel CAM, par le biais d'une interface commune ;
la conservation d'informations de traitement pendant une certaine période, au moins pour un temps correspondant à un temps de retard maximal entre la transmission du train synthétisé créé et la réception d'un train synthétisé sans brouillage du module CAM, les informations de traitement étant émises au moment de l'émission des paquets de trains de transport respectifs du train synthétisé, et utilisées pour traiter les paquets de trains de transport respectifs ;
la fourniture d'informations de comptage en amenant une zone d'addition d'informations de comptage fournie dans les paquets de trains de transport dans un état auquel une valeur de comptage particulière est ajoutée comme compteur de continuité locale pour les paquets de trains de transport du train synthétisé transmis au module CAM par le biais de l'interface commune ;
la réception d'un train synthétisé sans brouillage provenant du module CAM par le biais de l'interface commune obtenu par le module CAM en éliminant le brouillage du train synthétisé transmis ; et
le traitement des paquets de trains de transport respectifs du train synthétisé sans brouillage reçu sur la base des informations de traitement correspondant aux paquets de trains de transport respectifs délivrés en séquence,
dans lequel les informations de comptage fournissent une indication pour le module CAM pour savoir si le dispositif électronique a ou non la fonction d'effectuer un changement de l'ordre des paquets et si le changement de l'ordre des paquets est autorisé ou non dans le module CAM, dans lequel une valeur de comptage particulière indique que le dispositif électronique n'a pas la fonction de changement de l'ordre des paquets et le changement de l'ordre des paquets n'est pas autorisé dans le module CAM et d'autres valeurs de comptage indiquent que le dispositif électronique a la fonction de changement de l'ordre des paquets et le changement de l'ordre des paquets est autorisé dans le module CAM.

13. Récepteur de télévision comprenant un dispositif électronique (100) selon l'une quelconque des revendications 1 à 6.

14. Boîtier supérieur d'appareil comprenant un dispositif électronique (100) selon l'une quelconque des revendications 1 à 6.

15. Procédé exécuté par un module d'accès conditionnel, CAM (200) d'un système de réception de radiodiffusion numérique, ledit procédé comprenant :
la réception d'un train synthétisé créé en synthétisant des paquets de trains de transport provenant de plusieurs trains de transport à partir d'un dispositif hôte par le biais d'une interface commune ;
la séparation des paquets de trains de transport respectifs du train synthétisé reçu ;
le décryptage des paquets de trains de transport séparés respectifs ;
la synthèse des paquets de trains de transport décryptés respectifs pour créer un train synthétisé sans brouillage ;
la transmission du train synthétisé sans brouillage créé au dispositif hôte par le biais de l'interface commune ; et
la commande de la séparation, du décryptage et de la synthèse sur la base d'informations de comptage ajoutées à une zone d'addition d'informations de comptage fournie dans des paquets de trains de transport du train synthétisé reçu en amenant la zone d'addition d'informations de comptage fournie dans des paquets de trains de transport dans un état auquel une valeur de compte particulière est ajoutée en tant que compteur de continuité local pour des paquets de trains de transport du train synthétisé,
dans lequel les informations de comptage fournissent une indication pour le module CAM pour savoir si le dispositif électronique a ou non la fonction d'effectuer un changement de l'ordre des paquets et si le changement de l'ordre des paquets est autorisé ou non dans le module CAM, dans lequel une valeur de comptage particulière indique que le dispositif électronique n'a pas la fonction de changement de l'ordre des paquets et le changement de l'ordre des paquets n'est pas autorisé dans le module CAM et d'autres valeurs de comptage indiquent que le dispositif électronique a la fonction de changement de l'ordre des paquets et le changement de l'ordre des paquets est autorisé dans le module CAM.
